# EUROPEAN PATENT APPLICATION

(11) **EP 4 797 097 A1**
(43) Date of publication of application: **26.08.2026**
(21) Application number: 26156137.7
(22) Date of filing: 03.02.2026
(51) Int. Cl.: G06F 9/50, G06F 17/16

(54) **INCREASING EFFICIENCY OF A KERNEL USING STREAMING MULTIPROCESSOR-LEVEL TIME ESTIMATION**

(30) Priority: 11.02.2025 US 202519051102
(71) Applicant: Microsoft Technology Licensing, LLC, Redmond, WA 98052 (US)
(72) Inventor: ALI, Mustafa Fayez Ahmed, Redmond, 98052 (US); SHAH, Preyas Janak, Redmond, 98052 (US); AGRAWAL, Gaurav, Redmond, 98052 (US)
(74) Representative: CMS Cameron McKenna Nabarro Olswang LLP

(57) **Abstract**

Techniques are described herein that are capable of increasing efficiency of a kernel using streaming multiprocessor-level time estimation. Tiling strategies for performing respective implementations of a matrix multiplication operation are defined by taking into consideration dimensions of first and second matrices that the matrix multiplication operation is configured to multiply. Estimated amounts of time or estimated latencies, which are associated with a kernel performing the respective implementations of the matrix multiplication operation using the respective tiling strategies, are calculated. The kernel is configured to implement an identified tiling strategy to perform a subsequent implementation of the matrix multiplication operation as a result of an estimated amount of time associated with the identified tiling strategy being no greater than an estimated amount of time associated with each other tiling strategy.

## Description

### BACKGROUND

A kernel is code (e.g., software or firmware) that is configured to perform matrix multiplication operations by running on a graphics processing unit. A matrix multiplication operation is a mathematical operation that multiplies a first matrix and a second matrix to provide a third matrix (a.k.a. a matrix product). A number of columns in the first matrix is equal to a number of rows in the second matrix. The first matrix and the third matrix have a same number of rows. The second matrix and the third matrix have a same number of columns. A graphics processing unit is an electronic circuit that is configured to accelerate processing of a workload by executing a kernel that processes portions of the workload in parallel across streaming multiprocessors (a.k.a. compute units or execution units), which are included in the graphics processing unit. A streaming multiprocessor is a processing element that executes one thread at a time, though the streaming multiprocessor may store multiple threads in a queue for sequential execution.

A roofline measurement technique traditionally is used to estimate computational efficiency of a kernel that runs on a graphics processing unit. The roofline measurement technique typically generates a plot of achievable performance against arithmetic intensity, which may highlight hardware limitations in the graphics processing unit and optimization opportunities. However, the roofline measurement technique simplifies complex interactions within the graphics processing unit to an extent that may overlook detailed performance bottlenecks. The plot generated by the roofline measurement technique provides a static view that may not take into consideration dynamic changes in workload or resource contention. The roofline measurement technique focuses on a limited set of factors, such as floating-point operations and memory bandwidth, which may result in overlooking other factors that are capable of having a meaningful impact on the computational efficiency of the kernel. Accordingly, relying on the roofline measurement technique to configure the kernel may result in the kernel having a relatively low computational efficiency.

### SUMMARY

It may be desirable to increase efficiency of a kernel that executes on a graphics processing unit by configuring (e.g.., reconfiguring) the kernel to implement a tiling strategy that is determined using streaming multiprocessor-level time estimation. Streaming multiprocessor-level time estimation is a technique that estimates an amount of time that is consumed by a kernel to multiply matrices using a tiling technique while running on a graphics processing unit based on (e.g., based at least on) attributes of streaming multiprocessors in the graphics processing unit. Examples of such an attribute include but are not limited to a number of streaming multiprocessors in the graphics processing unit and capabilities of the streaming multiprocessors. Examples of a capability of a streaming multiprocessor include but are not limited to a processing capability and an accessing capability. A processing capability of a streaming multiprocessor is a capability of the streaming multiprocessor with regard to processing information. One example of a processing capability of a streaming multiprocessor is a number of elemental operations that the streaming multiprocessor is capable of performing per unit of time. Examples of a unit of time include but are not limited to a second, a minute, and an hour. An accessing capability of a streaming multiprocessor is a capability of the streaming multiprocessor with regard to accessing data. One example of an accessing capability of a streaming multiprocessor is a number of bytes that the streaming multiprocessor is capable of reading or writing per unit of time.

An elemental operation is a multiplication operation or an addition operation. In a multiplication example, the multiplication operation multiplies a first element (e.g., a single first element) in a first matrix and a second element (e.g., a single second element) in a second matrix to provide a product. In another multiplication example, the multiplication operation multiplies two values (e.g., two elements). In an addition example, the addition operation sums (e.g., adds) products that result from respective multiplication operations. In another addition example, the addition operation sums two values (e.g., two products). For the purpose of illustration, assume that a first matrix includes one row and three columns, including the elements A1, A2, and A3. Further assume that a second matrix includes three rows and a single column, including the elements B1, B2, and B3. Multiplying the first and second matrices involves determining a dot product of the first and second matrices, which includes three multiplication operations and two addition operations. The three multiplication operations are as follows: A1*B1=N1, A2*B2=N2, and A3*B3=N3, where N1, N2, and N3 are products resulting from the three multiplication operations. The two addition operations may be performed in any suitable order. In a first example, the two addition operations are N1+N2=X and X+N3=Y. In a second example, the two addition operations are N1+N3=X and X+N2=Y. In a third example, the two addition operations are N2+N3=X and X+N1=Y.

A tiling strategy is a technique in which a matrix is divided into multiple sub-matrices (a.k.a. tiles). For example, a matrix that includes four rows and five columns may be divided into a first tile that includes three rows and five columns and a second tile that includes one row and five columns. In another example, a matrix that includes four rows and five columns may be divided into a first tile that includes four rows and two columns and a second tile that includes four rows and three columns. When a kernel implements a tiling strategy to multiply a first matrix and a second matrix, the kernel multiplies tiles from the first matrix with tiles from the second matrix. A tile from a first matrix and a tile from a second matrix that are to be multiplied may be referred to as a "tile combination". Elemental operations that define a matrix multiplication operation that is to be performed to multiply the first matrix and the second matrix may be divided into subsets (e.g., portions). Each portion may correspond to multiplication of tiles that are included in a respective tile combination. The portions of the elemental operations may be allocated to respective streaming multiprocessors to the extent possible. In an aspect, a first portion is allocated to a first streaming multiprocessor; a second portion is allocated to a second streaming multiprocessor, and so on. It may be necessary or desirable to split a portion across multiple streaming multiprocessors, for example, if the portion exceeds the capabilities of a single streaming multiprocessor, if splitting the portion increases the efficiency of the kernel, or for testing purposes to determine whether splitting the portion increases the efficiency of the kernel.

By using streaming multiprocessor-level time estimation, the efficiency of the kernel with regard to each of multiple tiling strategies may be determined more accurately, precisely, and/or reliably than a roofline measurement technique, and the kernel may be configured to implement the tiling technique associated with the highest efficiency.

Various approaches are described herein for, among other things, increasing efficiency of a kernel using streaming multiprocessor-level time estimation. In a first example approach, a plurality of tiling strategies are defined by taking into consideration first dimensions of a first matrix and second dimensions of a second matrix. The plurality of tiling strategies define respective sizes of first tiles in the first matrix and respective sizes of second tiles in the second matrix that are to be utilized during a plurality of respective implementations of a matrix multiplication operation that is configured to multiply the first tiles and the second tiles. A plurality of respective estimated amounts of time, which are to be consumed by a kernel to perform the plurality of respective implementations of the matrix multiplication operation using the plurality of tiling strategies while running on a graphics processing unit, are calculated. The plurality of respective estimated amounts of time are calculated by performing a plurality of respective allocations of subsets of elemental operations that define the matrix multiplication operation to streaming multiprocessors, which are included in the graphics processing unit, in accordance with the plurality of tiling strategies. The plurality of respective allocations take into consideration a number of the streaming multiprocessors, respective processing capabilities of the streaming multiprocessors, and a number of the elemental operations. The kernel is configured to implement an identified tiling strategy of the plurality of tiling strategies to perform a subsequent implementation of the matrix multiplication operation as a result of a criterion being satisfied. The criterion indicates (e.g., specifies or requires) that an estimated amount of time that is to be consumed by the kernel to perform the subsequent implementation of the matrix multiplication operation using the identified tiling strategy is no greater than an estimated amount of time that is to be consumed by the kernel to perform the subsequent implementation of the matrix multiplication operation using each other tiling strategy of the plurality of tiling strategies.

In a second example approach, a plurality of tiling strategies, which define a plurality of respective orders in which elemental operations that define a matrix multiplication operation are to be performed during a plurality of respective implementations of the matrix multiplication operation, are defined by taking into consideration dimensions of first and second matrices that the matrix multiplication operation is configured to multiply. A plurality of respective estimated amounts of time, which are to be consumed by a kernel to perform the plurality of respective implementations of the matrix multiplication operation using the plurality of tiling strategies while running on a graphics processing unit, are calculated. The plurality of respective estimated amounts of time are calculated by performing a plurality of respective allocations of subsets of the elemental operations to streaming multiprocessors, which are included in the graphics processing unit, using the plurality of tiling strategies. The plurality of respective allocations take into consideration a number of the streaming multiprocessors, respective processing capabilities of the streaming multiprocessors, a number of the elemental operations, and the dimensions of the first and second matrices. The kernel is configured to implement an identified tiling strategy of the plurality of tiling strategies to perform a subsequent implementation of the matrix multiplication operation as a result of a criterion being satisfied. The criterion indicates that an estimated amount of time that is to be consumed by the kernel to perform the subsequent implementation of the matrix multiplication operation using the identified tiling strategy is no greater than an estimated amount of time that is to be consumed by the kernel to perform the subsequent implementation of the matrix multiplication operation using each other tiling strategy of the plurality of tiling strategies.

In a third example approach, a plurality of tiling strategies that define a plurality of respective permutations of shape combinations, which define shapes of tiles of first and second matrices that are to be multiplied during a plurality of respective implementations of a matrix multiplication operation that is configured to multiply the first and second matrices, are established by taking into consideration dimensions of the first and second matrices. A plurality of respective estimated latencies, which are associated with a kernel performing the plurality of respective implementations of the matrix multiplication operation using the plurality of tiling strategies while running on a graphics processing unit, are calculated. The plurality of respective estimated latencies are calculated by allocating elemental operations that define the matrix multiplication operation across streaming multiprocessors in the graphics processing unit in conformance with the plurality of tiling strategies utilizing a number of the streaming multiprocessors, respective processing capabilities of the streaming multiprocessors, and a number of the elemental operations. The kernel is configured to implement an identified tiling strategy of the plurality of tiling strategies to perform a subsequent implementation of the matrix multiplication operation as a result of a criterion being satisfied. The criterion indicates that an estimated latency associated with the kernel performing the subsequent implementation of the matrix multiplication operation using the identified tiling strategy is no greater than an estimated latency associated with the kernel performing the subsequent implementation of the matrix multiplication operation using each other tiling strategy of the plurality of tiling strategies.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Moreover, it is noted that the invention is not limited to the specific embodiments described in the Detailed Description and/or other sections of this document. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form part of the specification, illustrate embodiments of the present invention and, together with the description, further serve to explain the principles involved and to enable a person skilled in the relevant art(s) to make and use the disclosed technologies.
FIG. 1 is a block diagram of an example time estimation-based kernel configuration system in accordance with an embodiment.
FIGS. 2-4 depict flowcharts of example methods for increasing efficiency of a kernel using streaming multiprocessor-level time estimation in accordance with embodiments.
FIG. 5 is a block diagram of an example computing system in accordance with an embodiment.
FIG. 6 is a system diagram of an example mobile device in accordance with an embodiment.
FIG. 7 depicts an example computer in which embodiments may be implemented.

The features and advantages of the disclosed technologies will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

### I. Example Embodiments

It may be desirable to increase efficiency of a kernel that executes on a graphics processing unit by configuring (e.g.., reconfiguring) the kernel to implement a tiling strategy that is determined using streaming multiprocessor-level time estimation. Streaming multiprocessor-level time estimation is a technique that estimates an amount of time that is consumed by a kernel to multiply matrices using a tiling technique while running on a graphics processing unit based on (e.g., based at least on) attributes of streaming multiprocessors in the graphics processing unit. Examples of such an attribute include but are not limited to a number of streaming multiprocessors in the graphics processing unit and capabilities of the streaming multiprocessors. Examples of a capability of a streaming multiprocessor include but are not limited to a processing capability and an accessing capability. A processing capability of a streaming multiprocessor is a capability of the streaming multiprocessor with regard to processing information. One example of a processing capability of a streaming multiprocessor is a number of elemental operations that the streaming multiprocessor is capable of performing per unit of time. Examples of a unit of time include but are not limited to a second, a minute, and an hour. An accessing capability of a streaming multiprocessor is a capability of the streaming multiprocessor with regard to accessing data. One example of an accessing capability of a streaming multiprocessor is a number of bytes that the streaming multiprocessor is capable of reading or writing per unit of time.

An elemental operation is a multiplication operation or an addition operation. In a multiplication example, the multiplication operation multiplies a first element (e.g., a single first element) in a first matrix and a second element (e.g., a single second element) in a second matrix to provide a product. In another multiplication example, the multiplication operation multiplies two values (e.g., two elements). In an addition example, the addition operation sums (e.g., adds) products that result from respective multiplication operations. In another addition example, the addition operation sums two values (e.g., two products). For the purpose of illustration, assume that a first matrix includes one row and three columns, including the elements A1, A2, and A3. Further assume that a second matrix includes three rows and a single column, including the elements B1, B2, and B3. Multiplying the first and second matrices involves determining a dot product of the first and second matrices, which includes three multiplication operations and two addition operations. The three multiplication operations are as follows: A1*B1=N1, A2*B2=N2, and A3*B3=N3, where N1, N2, and N3 are products resulting from the three multiplication operations. The two addition operations may be performed in any suitable order. In a first example, the two addition operations are N1+N2=X and X+N3=Y. In a second example, the two addition operations are N1+N3=X and X+N2=Y. In a third example, the two addition operations are N2+N3=X and X+N1=Y.

A tiling strategy is a technique in which a matrix is divided into multiple sub-matrices (a.k.a. tiles). For example, a matrix that includes four rows and five columns may be divided into a first tile that includes three rows and five columns and a second tile that includes one row and five columns. In another example, a matrix that includes four rows and five columns may be divided into a first tile that includes four rows and two columns and a second tile that includes four rows and three columns. When a kernel implements a tiling strategy to multiply a first matrix and a second matrix, the kernel multiplies tiles from the first matrix with tiles from the second matrix. A tile from a first matrix and a tile from a second matrix that are to be multiplied may be referred to as a "tile combination". Elemental operations that define a matrix multiplication operation that is to be performed to multiply the first matrix and the second matrix may be divided into subsets (e.g., portions). Each portion may correspond to multiplication of tiles that are included in a respective tile combination. The portions of the elemental operations may be allocated to respective streaming multiprocessors to the extent possible. In an aspect, a first portion is allocated to a first streaming multiprocessor; a second portion is allocated to a second streaming multiprocessor, and so on. It may be necessary or desirable to split a portion across multiple streaming multiprocessors, for example, if the portion exceeds the capabilities of a single streaming multiprocessor, if splitting the portion increases the efficiency of the kernel, or for testing purposes to determine whether splitting the portion increases the efficiency of the kernel.

By using streaming multiprocessor-level time estimation, the efficiency of the kernel with regard to each of multiple tiling strategies may be determined more accurately, precisely, and/or reliably than a roofline measurement technique, and the kernel may be configured to implement the tiling strategy associated with the highest efficiency.

Example embodiments described herein are capable of increasing efficiency of a kernel using streaming multiprocessor-level time estimation. Example techniques described herein have a variety of benefits as compared to conventional techniques for determining efficiency of a kernel. For instance, the example techniques are capable of increasing accuracy, precision, and/or reliability of an estimate of the efficiency of the kernel with regard to any one or more tiling strategies. The example techniques are capable of identifying the tiling strategies to be considered for implementation by the kernel based on attributes of the graphics processing unit on which the kernel runs. The example techniques are capable of identifying the tiling strategy that provides the highest efficiency for the kernel and, as a result, configuring the kernel to implement that tiling strategy.

The example techniques are capable of reducing an amount of time and/or resources (e.g., processor cycles, memory, network bandwidth) that is consumed (e.g., by a computing system) to perform a matrix multiplication operation. For instance, by reducing an amount of time and/or resources consumed by a kernel that executes on a graphics processing unit in a computing system to perform the matrix multiplication operation, the amount of time and/or resources consumed by the computing system may be reduced. In a first aspect, the example techniques reduce the amount of time and/or resources that is consumed by calculating latencies or estimated amounts of time that are to be consumed by the kernel to perform respective implementations of the matrix multiplication using the respective tiling strategies. In a second aspect, the example techniques reduce the amount of time and/or resource that is consumed by configuring the kernel to implement an identified tiling strategy, which is selected from the tiling strategies as a result of a latency or estimated amount of time associated with the identified tiling strategy being no greater than (e.g., being less than) a latency or estimated amount of time associated with each other tiling strategy.

The example techniques may automate defining tiling strategies to be implemented by a kernel to perform a matrix multiplication operation, identifying a tiling strategy (from the defined tiling strategies) corresponding to a latency or estimated amount of time that is no greater than (e.g., that is less than) a latency or estimated amount of time corresponding to each other defined tiling strategy, and/or configuring the kernel to implement the identified tiling strategy.

By reducing the amount of time and/or resources that is consumed by a computing system to perform a matrix multiplication operation, the efficiency of the computing system may be increased. By reducing the amount of time that is consumed to perform the matrix multiplication operation, the example techniques may increase a user experience and/or efficiency of a user (e.g., an end user) who initiates the matrix multiplication operation or for whom the matrix multiplication operation is performed. The example techniques may reduce a number of tasks that are manually performed by an information technology (IT) professional by automating defining tiling strategies to be implemented by a kernel to perform the matrix multiplication operation, identifying a tiling strategy (from the defined tiling strategies) corresponding to a latency or estimated amount of time that is no greater than (e.g., that is less than) a latency or estimated amount of time corresponding to each other defined tiling strategy, and/or configuring the kernel to implement the identified tiling strategy. The user experience and/or the efficiency of the user and/or the IT professional may be increased in other ways, as well. For example, the user experience and/or the efficiency may be increased through a more accurate, precise, and/or reliable estimate of the efficiency of the kernel with regard to any one or more of the defined tiling strategies.

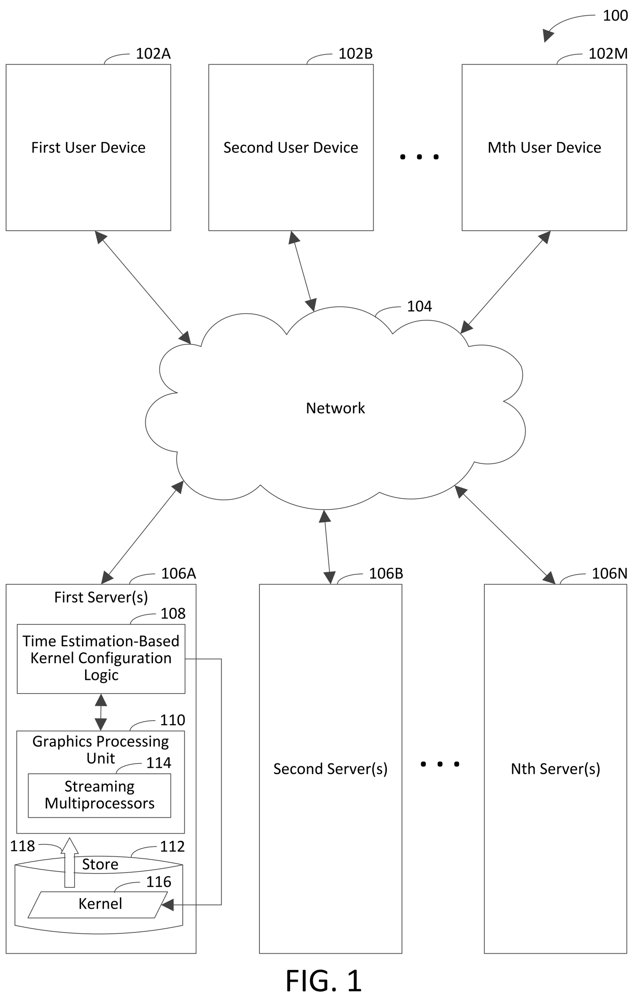

FIG. 1 is a block diagram of an example time estimation-based kernel configuration system 100 in accordance with an embodiment. Generally speaking, the time estimation-based kernel configuration system 100 operates to provide information to users in response to requests (e.g., hypertext transfer protocol (HTTP) requests) that are received from the users. The information may include documents (Web pages, images, audio files, video files, etc.), output of executables, and/or any other suitable type of information. In accordance with example embodiments described herein, the time estimation-based kernel configuration system 100 increases efficiency of a kernel 116 using streaming multiprocessor-level time estimation. Detail regarding techniques for increasing efficiency of a kernel using streaming multiprocessor-level time estimation is provided in the following discussion.

As shown in FIG. 1, the time estimation-based kernel configuration system 100 includes a plurality of user devices 102A-102M, a network 104, and a plurality of servers 106A-106N. Communication among the user devices 102A-102M and the servers 106A-106N is carried out over the network 104 using well-known network communication protocols. The network 104 may be a wide-area network (e.g., the Internet), a local area network (LAN), another type of network, or a combination thereof.

The user devices 102A-102M are computing systems that are capable of communicating with servers 106A-106N. A computing system is a system that includes at least a portion of a processor system such that the portion of the processor system includes at least one processor that is capable of manipulating data in accordance with a set of instructions. A processor system includes one or more processors, which may be on a same (e.g., single) device or distributed among multiple (e.g., separate) devices. For instance, a computing system may be a computer, a personal digital assistant, etc. The user devices 102A-102M are configured to provide requests to the servers 106A-106N for requesting information stored on (or otherwise accessible via) the servers 106A-106N. For instance, a user may initiate a request for executing a computer program (e.g., an application) using a client (e.g., a Web browser, Web crawler, or other type of client) deployed on a user device 102 that is owned by or otherwise accessible to the user. In accordance with some example embodiments, the user devices 102A-102M are capable of accessing domains (e.g., Web sites) hosted by the servers 104A-104N, so that the user devices 102A-102M may access information that is available via the domains. Such domain may include Web pages, which may be provided as hypertext markup language (HTML) documents and objects (e.g., files) that are linked therein, for example.

Each of the user devices 102A-102M may include any client-enabled system or device, including but not limited to a desktop computer, a laptop computer, a tablet computer, a wearable computer such as a smart watch or a head-mounted computer, a personal digital assistant, a cellular telephone, an Internet of things (IoT) device, or the like. It will be recognized that any one or more of the user devices 102A-102M may communicate with any one or more of the servers 106A-106N.

The servers 106A-106N are computing systems that are capable of communicating with the user devices 102A-102M. The servers 106A-106N are configured to execute computer programs that provide information to users in response to receiving requests from the users. For example, the information may include documents (Web pages, images, audio files, video files, etc.), output of executables, or any other suitable type of information. In accordance with some example embodiments, the servers 106A-106N are configured to host respective Web sites, so that the Web sites are accessible to users of the time estimation-based kernel configuration system 100.

One example type of computer program that may be executed by one or more of the servers 106A-106N is a developer tool. A developer tool is a computer program that performs diagnostic operations (e.g., identifying source of problem, debugging, profiling, controlling, etc.) with respect to program code. Examples of a developer tool include an artificial intelligence (AI) service suite, an integrated development environment (IDE), and a web development platform. An AI service suite is a program that provides tools that are usable by software developers to build, deploy, and scale AI applications (e.g., AI models). For instance, the AI service suite may enable the software developers to build, deploy, and scale AI applications without needing to have extensive AI or data science expertise. An example of an AI service suite is an Azure AI Cloud^{™} suite, developed distributed by Microsoft Corporation. An integrated development environment (IDE) is a program that provides tools that are usable by software developers to develop software. For instance, the IDE may include a source code editor, build automation tools, a debugger, a compiler, and/or an interpreter. Examples of an IDE include a Microsoft Visual Studio^{®} IDE, developed and distributed by Microsoft Corporation; an AppCode^{®} IDE, a PhpStorm^{®} IDE, a Rider^{®} IDE, a WebStorm^{®} IDE, etc., developed and distributed by JetBrains s.r.o.; a JDeveloper^{®} IDE, developed and distributed by Oracle International Corporation; a NetBeans^{®} IDE, developed and distributed by Sun Microsystems, Inc.; an Eclipse^{™} IDE, developed and distributed by Eclipse Foundation; and an Android Studio^{™} IDE, developed and distributed by Google LLC and JetBrains s.r.o. A web development platform is a program that provides tools that are usable by software developers to create, deploy, and manage web applications. The tools may perform functions such as web hosting, database management, and/or content delivery. Examples of a web development platform include a Windows Azure^{®} platform, developed and distributed by Microsoft Corporation; an Amazon Web Services^{®} platform, developed and distributed by Amazon.com, Inc.; a Google App Engine^{®} platform, developed and distributed by Google LLC; a VMWare^{®} platform, developed and distributed by VMWare, Inc.; and a Force.com^{®} platform, developed and distributed by Salesforce, Inc. It will be recognized that the example techniques described herein may be implemented using a developer tool. It will be recognized that the example techniques described herein may be implemented using a developer tool.

Another example type of a computer program that may be executed by one or more of the servers 106A-106N is an AI model. An AI model is a program that utilizes artificial intelligence to generate an answer (a.k.a. an AI response) that is responsive to an AI prompt (a.k.a. prompt) that is received by the AI model. Artificial intelligence is intelligence of a machine (e.g., a computing system) and/or code (e.g., software and/or firmware), as opposed to intelligence of a living creature (e.g., a human). In an example, the AI model is an artificial general intelligence model. An artificial general intelligence model is an AI model (e.g., an autonomous AI model) that is configured to be capable of performing any task that an intelligent being (e.g., a human) is capable of performing. In an example implementation, the artificial general intelligence model is capable of performing a task that surpasses the capabilities of an animal.

In an aspect, the AI model includes (e.g., is) a generative language model. A generative language model is an AI model that is capable of generating original text output based on sample data. Examples of a generative language model include but are not limited to a generative pre-trained transformer 3 (a.k.a., GPT-3^{®}) model and a generative pre-trained transformer 4 (a.k.a. GPT-4^{®}) model, developed and distributed by OpenAI, Inc.; a large language model Meta AI (a.k.a. LLaMA^{®}) model, developed and distributed by Meta Platforms Inc.; a language model for dialogue applications (a.k.a., LaMDA^{®}) model and a Gemini^{®} model, developed and distributed by Google LLC; and a BigScience large open-science open-access multilingual language model (a.k.a. BLOOM) model, developed and distributed by the BigScience collaborative initiative. A generative language model may use any suitable relevancy determination and/or ranking technique. In an example, the generative language model uses a BM25 (a.k.a. Okapi BM25) ranking function to perform its analysis (e.g., based on keywords).

In another aspect, the AI model includes a large language model (LLM). A large language model is an artificial neural network that is capable of performing natural language processing (NLP) tasks. In an example, the large language model uses a transformer model to perform the NLP tasks. In an aspect, the large language model is trained (e.g., pre-trained) using self-supervised learning and semi-supervised learning. Examples of a large language model include but are not limited to the GPT-3^{®} and GPT-4^{®} models, developed and distributed by OpenAI, Inc.; the LLaMA^{®} model, developed and distributed by Meta Platforms Inc.; and a pathways language model (a.k.a., PaLM^{®}) model and the Gemini^{®} model, developed and distributed by Google LLC.

In yet another aspect, the AI model 514 includes an embedding model. An embedding model is an AI model that uses deep learning to convert data into vectors, which represent attributes of the data, and that compares at least a subset of the vectors to determine an extent to which the vectors that are included in the subset are similar. In an example, each vector represents a semantic meaning of one or more AI prompts, one or more items referenced in the one or more AI prompts, or one or more AI responses to the one or more AI prompts. In an example implementation, the embedding model is an encoder-only model. One example of an encoder-only model is the bidirectional encoder representations from transformers (BERT^{™}) model, which is developed and distributed by Google LLC. In another example implementation, the embedding model is a decoder-only model. In yet another example implementation, the embedding model is an encoder-decoder model. One example of an encoder-decoder model is the FLAN-T5^{™} model, which is developed and distributed by Google LLC.

In still another aspect, the AI model includes multiple types of AI models. In an example, weights are applied to the responses generated by the respective types of AI models. In an example implementation, the AI model includes a generative AI model and an embedding model. In accordance with this implementation, a first weight is applied to a first response generated by the generative AI model to provide a first weighted response, and a second weight that is different from the first weight is applied to a second response of the embedding model to provide a second weighted response. In further accordance with this implementation, the AI model combines (e.g., sums) the first weighted response and the second weighted response to generate a response of the AI model.

An AI prompt indicates (e.g., specifies) a task that is to be performed by an AI model. Examples of an AI prompt include but are not limited to a zero-shot prompt, a one-shot prompt, and a few-shot prompt. A zero-shot prompt is a prompt for which the prompt and/or its corresponding contextual information, which are to be processed by the AI model, is not included in pre-trained knowledge of the AI model. A one-shot prompt is a prompt that includes a target prompt along with a single example prompt and a single example answer that is responsive to the single example prompt. The example prompt and the example answer provide guidance as to how the AI model is expected to respond to the target prompt. A few-shot prompt is a prompt that includes a target prompt along with multiple example prompts and multiple example answers that are responsive to the respective example prompts. The example prompts and the example answers provide guidance as to how the AI model is expected to respond to the target prompt.

An AI prompt may be a natural language prompt. A natural language prompt is a prompt that is written in a natural language. A natural language is a human language that has developed through use and repetition. For instance, the natural language may have developed naturally without conscious planning or premeditation. Examples of a natural language include English, French, Spanish, and Mandarin. In an aspect, the natural language prompt is generated by a user (e.g., a human). In another aspect, the natural language prompt is generated by a computing system (e.g., an AI assistant that runs on the computing system).

An AI prompt need not necessarily be written in a natural language. In an example, the AI prompt includes (e.g., is) computer code. In another example, the AI prompt is any suitable sequence of characters that is capable of being interpreted by an AI model.

In an example implementation, the kernel 106 is implemented (e.g., included) in an AI model. In accordance with this implementation, the kernel 106 performs a task that is indicated by an AI prompt by performing a matrix multiplication operation in accordance with any one or more of the techniques described herein. For example, the AI model (e.g., the kernel 116 therein) may receive the AI prompt from a user device 102 (e.g., any of the user devices 102A-102M).

Another example type of a computer program that may be executed by one or more of the servers 106A-106N is a shader program (a.k.a. a shader). A shader is a program that determines properties of graphical elements. Examples of a graphical element include but are not limited to a pixel, a vertex, a texture, a normal, a fragment, a triangle, an edge, a face, a mesh, a light, and a material. A pixel is a smallest addressable element in a raster image. A vertex is a data structure that describes (e.g., defines) a position of a point (e.g., a pixel). A texture is an image or a pattern that is applied to a surface. For instance, the texture may provide color or other detail to the surface. A normal is a vector that is perpendicular to a surface. For instance, the normal may be used for lighting calculations. A fragment is a potential pixel that is generated during rasterization and processed to determine a final pixel value. A triangle is a geometric primitive that is used to construct a three-dimensional model. An edge is a line that connects vertices. For instance, the edge may be used to define the shape of a polygon. A face is a flat surface that is defined by a set of vertices that are connected by edges. It may be said that the face is bounded by the edges. A mesh is a collection of vertices, edges, and faces that define the shape of a three-dimensional object. A light is a source (e.g., a virtual source) of illumination that impacts appearance of surface(s). A material is a property that defines how surface(s) interact with light. For example, the material may indicate how the light changes color(s) of the surface(s). In another example, the material may indicate how reflectivity and/or texture of the surface(s) impacts the appearance of the light. In an example implementation, the kernel 106 is implemented (e.g., included) in a shader.

The first server(s) 106A are shown to include time estimation-based kernel configuration logic 108, a graphics processing unit 110, and a store 112 for illustrative purposes. The graphics processing unit 110 includes streaming multiprocessors 114. The store 112 may be any suitable type of store. One type of store is a database. For instance, the store 112 may be a relational database, an entity-relationship database, an object database, an object relational database, an extensible markup language (XML) database, etc. The store 112 is shown to store the kernel 116 for non-limiting, illustrative purposes. The kernel 116 is configured to run on the graphics processing unit 110, as indicated by arrow 118.

The time estimation-based kernel configuration logic 108 is configured to increases efficiency of the kernel 116 using streaming multiprocessor-level time estimation. In a first example implementation, the time estimation-based kernel configuration logic 108 defines a plurality of tiling strategies, which define respective sizes of first tiles in a first matrix and respective sizes of second tiles in a second matrix that are to be utilized during a plurality of respective implementations of a matrix multiplication operation that is configured to multiply the first tiles and the second tiles. The time estimation-based kernel configuration logic 108 defines the plurality of tiling strategies by taking into consideration first dimensions of the first matrix and second dimensions of the second matrix. The time estimation-based kernel configuration logic 108 calculates a plurality of respective estimated amounts of time, which are to be consumed by the kernel 116 to perform the plurality of respective implementations of the matrix multiplication operation using the plurality of tiling strategies while running on the graphics processing unit 110. The time estimation-based kernel configuration logic 108 calculates the plurality of respective estimated amounts of time by performing a plurality of respective allocations of subsets of elemental operations that define the matrix multiplication operation to the streaming multiprocessors 114 in accordance with the plurality of tiling strategies. The plurality of respective allocations take into consideration a number of the streaming multiprocessors 114, respective processing capabilities of the streaming multiprocessors 114, and a number of the elemental operations. The time estimation-based kernel configuration logic 108 configures the kernel 116 to implement an identified tiling strategy of the plurality of tiling strategies to perform a subsequent implementation of the matrix multiplication operation as a result of a criterion being satisfied. The criterion indicates that an estimated amount of time that is to be consumed by the kernel 116 to perform the subsequent implementation of the matrix multiplication operation using the identified tiling strategy is no greater than an estimated amount of time that is to be consumed by the kernel 116 to perform the subsequent implementation of the matrix multiplication operation using each other tiling strategy of the plurality of tiling strategies.

In a second example implementation, the time estimation-based kernel configuration logic 108 defines a plurality of tiling strategies, which define a plurality of respective orders in which elemental operations that define a matrix multiplication operation are to be performed during a plurality of respective implementations of the matrix multiplication operation. The time estimation-based kernel configuration logic 108 defines the plurality of tiling strategies by taking into consideration dimensions of first and second matrices that the matrix multiplication operation is configured to multiply. The time estimation-based kernel configuration logic 108 calculates a plurality of respective estimated amounts of time, which are to be consumed by the kernel 116 to perform the plurality of respective implementations of the matrix multiplication operation using the plurality of tiling strategies while running on the graphics processing unit 110. The time estimation-based kernel configuration logic 108 calculates the plurality of respective estimated amounts of time by performing a plurality of respective allocations of subsets of the elemental operations to streaming multiprocessors 114 using the plurality of tiling strategies. The plurality of respective allocations take into consideration a number of the streaming multiprocessors 114, respective processing capabilities of the streaming multiprocessors 114, a number of the elemental operations, and the dimensions of the first and second matrices. The time estimation-based kernel configuration logic 108 configures the kernel 116 to implement an identified tiling strategy of the plurality of tiling strategies to perform a subsequent implementation of the matrix multiplication operation as a result of a criterion being satisfied. The criterion indicates that an estimated amount of time that is to be consumed by the kernel 116 to perform the subsequent implementation of the matrix multiplication operation using the identified tiling strategy is no greater than an estimated amount of time that is to be consumed by the kernel 116 to perform the subsequent implementation of the matrix multiplication operation using each other tiling strategy of the plurality of tiling strategies.

In a third example implementation the time estimation-based kernel configuration logic 108 establishes a plurality of tiling strategies that define a plurality of respective permutations of shape combinations, which define shapes of tiles of first and second matrices that are to be multiplied during a plurality of respective implementations of a matrix multiplication operation that is configured to multiply the first and second matrices, by taking into consideration dimensions of the first and second matrices. The time estimation-based kernel configuration logic 108 calculates a plurality of respective estimated latencies, which are associated with the kernel 116 performing the plurality of respective implementations of the matrix multiplication operation using the plurality of tiling strategies while running on the graphics processing unit 110. The time estimation-based kernel configuration logic 108 calculates the plurality of respective estimated latencies by allocating elemental operations that define the matrix multiplication operation across the streaming multiprocessors 114 in conformance with the plurality of tiling strategies utilizing a number of the streaming multiprocessors 114, respective processing capabilities of the streaming multiprocessors 114, and a number of the elemental operations. The time estimation-based kernel configuration logic 108 configures the kernel 116 to implement an identified tiling strategy of the plurality of tiling strategies to perform a subsequent implementation of the matrix multiplication operation as a result of a criterion being satisfied. The criterion indicates that an estimated latency associated with the kernel 116 performing the subsequent implementation of the matrix multiplication operation using the identified tiling strategy is no greater than an estimated latency associated with the kernel 116 performing the subsequent implementation of the matrix multiplication operation using each other tiling strategy of the plurality of tiling strategies.

The time estimation-based kernel configuration logic 108 may be implemented in various ways to increase efficiency of the kernel 116 using streaming multiprocessor-level time estimation, including being implemented in hardware, software, firmware, or any combination thereof. For example, the time estimation-based kernel configuration logic 108 may be implemented as computer program code configured to be executed in one or more processors. In another example, at least a portion of the time estimation-based kernel configuration logic 108 may be implemented as hardware logic/electrical circuitry. For instance, at least a portion of the time estimation-based kernel configuration logic 108 may be implemented in a field-programmable gate array (FPGA), an application-specific integrated circuit (ASIC), an application-specific standard product (ASSP), a system-on-a-chip system (SoC), a complex programmable logic device (CPLD), etc. Each SoC may include an integrated circuit chip that includes one or more of a processor (a microcontroller, microprocessor, digital signal processor (DSP), etc.), memory, one or more communication interfaces, and/or further circuits and/or embedded firmware to perform its functions.

It will be recognized that the time estimation-based kernel configuration logic 108 may be (or may be included in) a developer tool, though the scope of the example embodiments is not limited in this respect.

The time estimation-based kernel configuration logic 108 is shown to be incorporated in the first server(s) 106A for illustrative purposes and is not intended to be limiting. It will be recognized that the time estimation-based kernel configuration logic 108 (or any portion(s) thereof) may be incorporated in any one or more of the servers 106A-106N, any one or more of the user devices 102A-102M, or any combination thereof. For example, client-side aspects of the time estimation-based kernel configuration logic 108 may be incorporated in one or more of the user devices 102A-102M, and server-side aspects of the time estimation-based kernel configuration logic 108 may be incorporated in one or more of the servers 106A-106N.

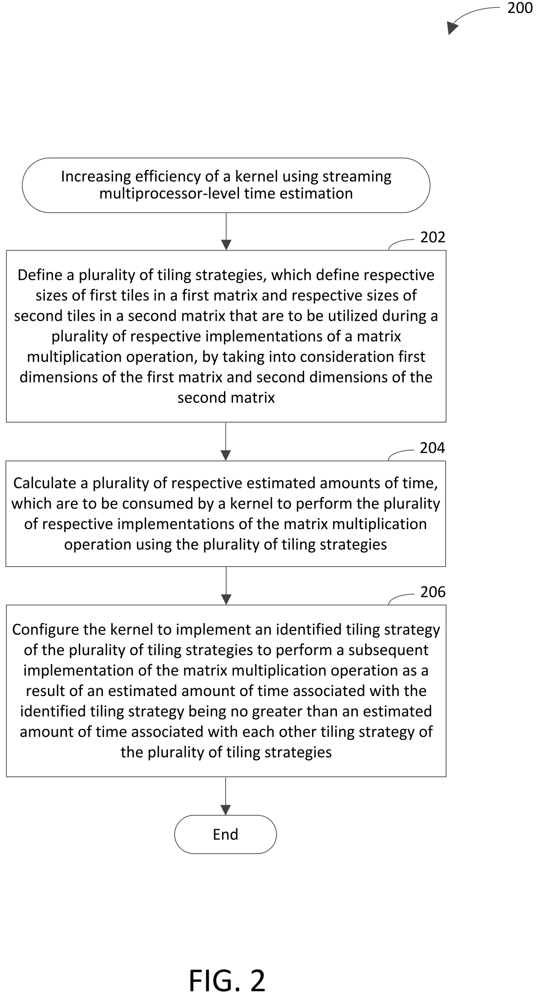

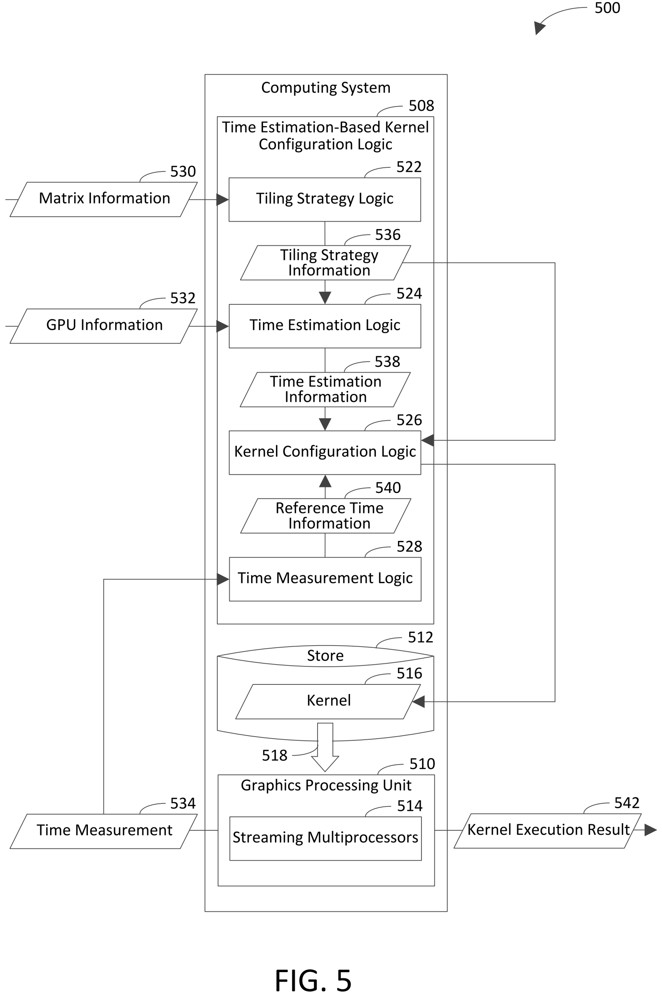

FIGS. 2-4 depict flowcharts 200, 300, and 400 of example methods for increasing efficiency of a kernel using streaming multiprocessor-level time estimation in accordance with embodiments. Flowcharts 200, 300, and 400 may be performed by the first server(s) 106A shown in FIG. 1, for example. For illustrative purposes, flowcharts 200, 300, and 400 are described with respect to a computing system 500 shown in FIG. 5, which is an example implementation of the first server(s) 106A. As shown in FIG. 5, the computing system 500 includes time estimation-based kernel configuration logic 508, graphics processing unit 510, and a store 512. The time estimation-based kernel configuration logic 508 includes tiling strategy logic 522, time estimation logic 524, kernel configuration logic 526, and time measurement logic 528. The graphics processing unit 510 includes streaming multiprocessors 514. The store 512 may be any suitable type of store. One type of store is a database. For instance, the store 512 may be a relational database, an entity-relationship database, an object database, an object relational database, an extensible markup language (XML) database, etc. The store 512 is shown to store the kernel 516 for non-limiting, illustrative purposes. The kernel 516 is configured to run on the graphics processing unit 510, as indicated by arrow 518. Further structural and operational embodiments will be apparent to persons skilled in the relevant art(s) based on the discussion regarding flowcharts 200, 300, and 400.

As shown in FIG. 2, the method of flowchart 200 begins at step 202. In step 202, a plurality of tiling strategies, which define respective sizes of first tiles in a first matrix and respective sizes of second tiles in a second matrix that are to be utilized during a plurality of respective implementations of a matrix multiplication operation that is configured to multiply the first tiles and the second tiles, are defined. The plurality of tiling strategies are defined by taking into consideration first dimensions of the first matrix and second dimensions of the second matrix. Each of the first dimensions and the second dimensions may include any suitable number of dimensions (e.g., 2, 3, 4, or 5). In an aspect, the matrix multiplication operation is a general matrix multiplication (GEMM) operation. A GEMM operation is a matrix multiplication operation that is configured (e.g., optimized) to be performed on a specific hardware architecture (e.g., a graphics processing unit). In an example the GEMM leverages parallelism and efficient memory access patterns. In another example, the GEMM is implemented in a math library (a.k.a. a linear algebra library). Examples of a math library include but are not limited to a basic linear algebra subprogram (BLAS), a CUDA BLAS (a.k.a. cuBLAS), and a math kernel library (MKL). For instance, the GEMM operation may be used in a machine learning (e.g., deep learning), scientific computing, or simulation application.

In an example implementation, the tiling strategy logic 522 defines the plurality of tiling strategies by taking into consideration the first dimensions of the first matrix and the second dimensions of the second matrix. In an aspect, matrix information 530 indicates (e.g., specifies) the first dimensions of the first matrix and the second dimensions of the second matrix. In accordance with this aspect, the tiling strategy logic 522 defines the plurality of tiling strategies based on (e.g., based at least on) the first dimensions of the first matrix and the second dimensions of the second matrix, as indicated by the matrix information 530. In accordance with this implementation, the tiling strategy logic 522 generates tiling strategy information 536, which indicates (e.g., specifies or describes) the plurality of tiling strategies. In an aspect, the tiling strategy information 536 indicates the respective sizes of the first tiles in the first matrix and the respective sizes of the second tiles in the second matrix for each tiling strategy. In another aspect, the tiling strategy information 536 indicates a number of the first tiles in the first matrix and a number of the second tiles in the second matrix for each tiling strategy. In yet another aspect, the tiling strategy information 536 indicates which elements of the first matrix are included in each of the first tiles and which elements of the second matrix are included in each of the second tiles for each tiling strategy.

In an example embodiment, the plurality of tiling strategies further define a plurality of respective orders in which elemental operations that define the matrix multiplication operation are to be performed during the plurality of respective implementations of the matrix multiplication operation.

At step 204, a plurality of respective estimated amounts of time, which are to be consumed by a kernel to perform the plurality of respective implementations of the matrix multiplication operation using the plurality of tiling strategies while running on a graphics processing unit, are calculated. The plurality of respective estimated amounts of time are calculated by performing a plurality of respective allocations of subsets of elemental operations that define the matrix multiplication operation to streaming multiprocessors, which are included in the graphics processing unit, in accordance with the plurality of tiling strategies. The plurality of respective allocations take into consideration a number of the streaming multiprocessors, respective capabilities of the streaming multiprocessors, and a number of the elemental operations. In an aspect, the capabilities of the streaming multiprocessors include processing capabilities of the streaming multiprocessors (e.g., a number of elemental operations that each streaming multiprocessor is capable of performing per unit of time) and/or accessing capabilities of the streaming multiprocessors (e.g., a number of bytes that each streaming multiprocessor is capable of reading or writing per unit of time). In another aspect, the plurality of tiling strategies are configured in accordance with a single instruction multi-threading (SIMT) execution model. A SIMT execution model is an execution model in which an instruction is broadcast to multiple threads, which causes the multiple threads to execute the instruction in parallel. In an example, the multiple threads execute the instruction by operating on different data. In accordance with this example, a first thread operates on first data, a second thread operates on second data that is different from the first data, a third thread operates on third data that is different from the first data and the second data, and so on. In yet another aspect, the subsets of the elemental operations that define the matrix multiplication operation are allocated to the streaming multiprocessors in accordance with a SIMT execution model.

In an example implementation, the time estimation logic 524 calculates the plurality of respective estimated amounts of time, which are to be consumed by the kernel 516 to perform the plurality of respective implementations of the matrix multiplication operation using the plurality of tiling strategies while running on the graphics processing unit 510. In an aspect, the time estimation logic 524 calculates the plurality of respective estimated amounts of time by analyzing the tiling strategy information 536 to determine the tiling strategies. The time estimation logic 524 calculates the plurality of respective estimated amounts of time by performing a plurality of respective allocations of subsets of the elemental operations that define the matrix multiplication operation to the streaming multiprocessors 514 in accordance with the plurality of tiling strategies. The plurality of respective allocations take into consideration a number of the streaming multiprocessors 514, respective capabilities of the streaming multiprocessors 514, and the number of the elemental operations that define the matrix multiplication operation. In an aspect, GPU information 532 indicates (e.g., specifies) the number of the streaming multiprocessors 514 and the respective capabilities of the streaming multiprocessors 514. In accordance with this aspect, the tiling strategy information 536 indicates the number of the elemental operations. In further accordance with this aspect, the time estimation logic 524 performs the plurality of respective allocations of subsets of the elemental operations to the streaming multiprocessors 514 by analyzing the GPU information 532 to determine the number of the streaming multiprocessors 514 and the respective capabilities of the streaming multiprocessors 514 and further by analyzing the tiling strategy information 536 to determine the number of the elemental operations. The time estimation logic 524 generates time estimation information 538, which indicates the plurality of respective estimated amounts of time that are to be consumed by the kernel 516 to perform the plurality of respective implementations of the matrix multiplication operation using the plurality of tiling strategies. Accordingly, the time estimation information 538 cross-references the plurality of respective estimated amounts of time with the plurality of tiling strategies.

In an example embodiment, the plurality of tiling strategies indicate a plurality of respective numbers of times that a memory access operation is performed during the plurality of respective implementations of the matrix multiplication operation. A memory access operation is an operation in which a memory is accessed. Examples of a memory access operation include but are not limited to a read operation and a write operation. A read operation is an operation in which information is read from a memory. A write operation is an operation in which information is written to memory. In accordance with this embodiment, the plurality of respective estimated amounts of time are calculated at step 204 by taking into consideration the plurality of respective numbers of times that the memory access operation is performed during the plurality of respective implementations of the matrix multiplication operation. In an aspect, the numbers of times are determined based on a data type used by the first and second matrices (e.g., used to define the elements of the first and second matrices) and a number of bytes that each streaming multiprocessor is capable of reading or writing per unit of time. Examples of a data type include but are not limited to an integer, a floating point 8 number, a floating point 16 number, a floating point 32 number, and a floating point 64 number.

In another example embodiment, an estimated amount of time that is to be consumed by a streaming multiprocessor to perform (e.g., execute) a subset of the elemental operations that define the matrix multiplication operation is calculated based on (e.g., based at least on) a first value and/or a second value. The first value is equal to a number of the elemental operations that are included in the subset divided by a number of elemental operations that the streaming multiprocessor is capable of performing per unit of time (e.g., per second). The second value is equal to a number of bytes that are to be read or written by the multiprocessor with regard to performing the subset of the elemental operations divided by a number of bytes that the streaming multiprocessor is capable of reading or writing per unit of time. In an aspect, the estimated amount of time that is to be consumed by the streaming multiprocessor to perform the subset of the elemental operations is equal to a sum of the first value and the second value. The unit of measurement for the first value and the second value is the unit of time. In an aspect, for each tiling strategy, the streaming multiprocessors consume respective estimated amounts of time to perform their respective subsets of the elemental operations in parallel. In accordance with this aspect, for each tiling strategy, the estimated amounts of time consumed by the respective streaming multiprocessors with regard to the tiling strategy include an identified estimated amount of time that is greater than each other estimated amount of time. In further accordance with this aspect, the identified estimated amount of time for each tiling strategy is designated as the respective estimated amount of time that is to be consumed by the kernel to perform the respective implementation of the matrix multiplication operation using the respective tiling strategy while running on the graphics processing unit.

At step 206, the kernel is configured to implement an identified tiling strategy of the plurality of tiling strategies to perform a subsequent implementation of the matrix multiplication operation as a result of an estimated amount of time associated with the identified tiling strategy being no greater than (e.g., being less than) an estimated amount of time associated with each other tiling strategy of the plurality of tiling strategies. In an aspect, the kernel is configured to implement the identified tiling strategy as a result of the estimated amount of time that is to be consumed by the kernel to perform the subsequent implementation of the matrix multiplication operation using the identified tiling strategy being no greater than the estimated amount of time that is to be consumed by the kernel to perform the subsequent implementation of the matrix multiplication operation using each other tiling strategy of the plurality of tiling strategies.

In an example implementation, the kernel configuration logic 526 configures the kernel 516 to implement the identified tiling strategy to perform the subsequent implementation of the matrix multiplication operation as a result of the estimated amount of time associated with the identified tiling strategy being no greater than the estimated amount of time associated with each other tiling strategy of the plurality of tiling strategies. In an aspect, the kernel configuration logic 526 configures the kernel 516 to implement the identified tiling strategy as a result of the estimated amount of time that is to be consumed by the kernel 516 to perform the subsequent implementation of the matrix multiplication operation using the identified tiling strategy being no greater than the estimated amount of time that is to be consumed by the kernel 516 to perform the subsequent implementation of the matrix multiplication operation using each other tiling strategy of the plurality of tiling strategies. In an aspect, the kernel configuration logic 526 analyzes the time estimation information 538 to determine the plurality of respective estimated amounts of time that are associated with the plurality of respective implementations of the matrix multiplication operation. By analyzing the time estimation information 538, the kernel configuration logic 526 determines an identified estimated amount of time that is no greater than the other estimated amounts of time and selects the identified tiling strategy for implementation in the kernel 516 by determining that the identified estimated amount of time is cross-referenced with the identified tiling strategy.

In an example split-K embodiment, the first dimensions of the first matrix include an M dimension and a K dimension. In accordance with the split-K embodiment, the second dimensions of the second matrix include the K dimension and an N dimension. In further accordance with the split-K embodiment, the identified tiling strategy is configured to utilize a split-K technique in which the K dimension is split into multiple portions that correspond to respective portions of a designated first tile of the first matrix and that further correspond to respective portions of a designated second tile of the second matrix. In an aspect, the split-K technique is utilized to calculate partial sums with respect to the k dimension, which correspond to the respective portions of the designated first tile and that further correspond to the respective portions of the designated second tile, and to sum the partial sums.

In a stream-K implementation of the split-K embodiment, the identified tiling strategy is configured to utilize a stream-K technique that increases a uniformity with which a portion of the elemental operations, which is configured to multiply the designated first tile and the designated second tile, is allocated across the streaming multiprocessors. In an example, the uniformity is increased by increasing a number of streaming multiprocessors across which the portion of the elemental operations is allocated. In another example, the identified tiling strategy is configured to utilize the stream-K technique as a result of a determination that one or more identified streaming multiprocessors, which are included in the streaming multiprocessors, are being utilized to an extent that is less than an extent threshold (e.g., to an extent that is less than the extent threshold for a duration of time that is greater than or equal to a duration threshold). The duration threshold may be a designated number of seconds, minutes, hours, or days. In accordance with this example, configuring the identified tiling strategy to utilize the stream-K technique includes distributing the portion of the elemental operations across a subset of the streaming multiprocessors that includes the one or more identified streaming multiprocessors. In yet another example, a first subset of the portion is allocated to a first streaming multiprocessor; a second subset of the portion is allocated to a second streaming multiprocessor, and so on. It will be recognized that the portion may be allocated across fewer than all of the streaming multiprocessors or across all of the streaming multiprocessors. For instance, the portion may be allocated across any suitable subset (e.g., 2, 3, or 4) of the streaming multiprocessors.

It will be recognized that, in addition to or in lieu of configuring the kernel to implement the identified tiling strategy at step 206, calculating the plurality of respective estimated amounts of time at step 204 may be used to estimate performance of the graphics processing unit with regard to the matrix multiplication operation (e.g., prior to the graphics processing unit being released to the public).

In some example embodiments, one or more steps 202, 204, and/or 206 of flowchart 200 may not be performed. Moreover, steps in addition to or in lieu of steps 202, 204, and/or 206 may be performed. For instance, in an example reference embodiment, the method of flowchart 200 further includes measuring a reference amount of time that the kernel, which is configured to implement an initial tiling strategy, consumes to perform an initial implementation of the matrix multiplication operation using the initial tiling strategy while running on the graphics processing unit. The initial tiling strategy defines an initial size of the first tiles and an initial size of the second tiles utilized during the initial implementation. In an example implementation, the time measurement logic 528 measures a reference amount of time that the kernel 516, which is configured to implement the initial tiling strategy, consumes to perform the initial implementation of the matrix multiplication operation using the initial tiling strategy while running on the graphics processing unit 510. In an aspect, the time measurement logic 528 performs (e.g., takes) a time measurement 534 to determine the reference amount of time. The time measurement logic 528 generates reference time information 540, which indicates the reference amount of time.

In accordance with the reference embodiment mentioned above, configuring the kernel at step 206 includes increasing an efficiency with which the kernel multiplies the first matrix and the second matrix by reconfiguring the kernel to implement the identified tiling strategy, in lieu of the initial tiling strategy, to perform the subsequent implementation of the matrix multiplication operation. The kernel is reconfigured to implement the identified tiling strategy in lieu of the initial tiling strategy as a result of the estimated amount of time that is to be consumed by the kernel to perform the subsequent implementation of the matrix multiplication operation using the identified tiling strategy being no greater than the reference amount of time. In an example implementation, the kernel configuration logic 526 reconfigures the kernel 516 to implement the identified tiling strategy in lieu of the initial tiling strategy as a result of the estimated amount of time associated with the identified tiling strategy being no greater than the reference amount of time. In an aspect, the kernel configuration logic 526 compares the estimated amount of time associated with the identified tiling strategy, as indicated by the time estimation information 538, and the reference amount of time, as indicated by the reference time information 540, to determine that the estimated amount of time associated with the identified tiling strategy is no greater than the reference amount of time.

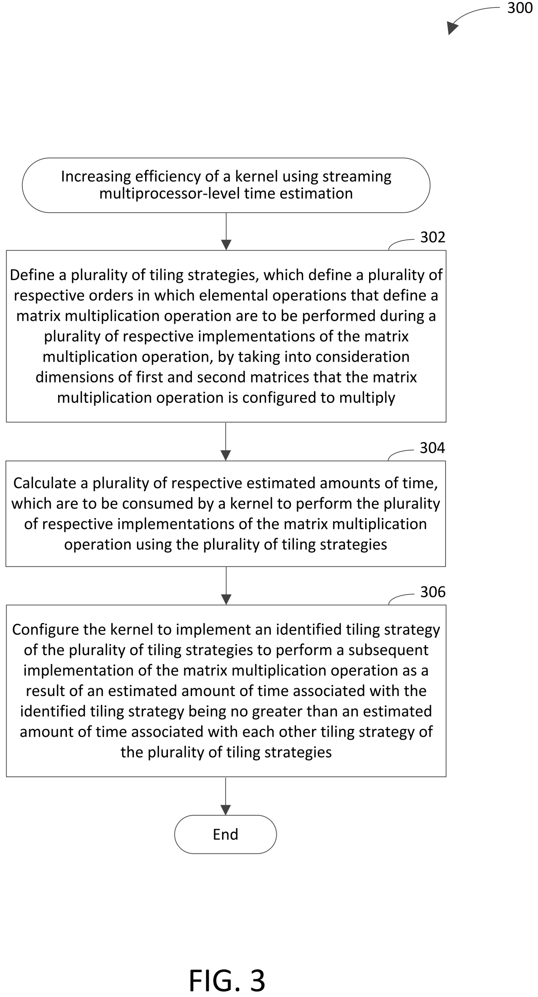

As shown in FIG. 3, the method of flowchart 300 begins at step 302. In step 302, a plurality of tiling strategies, which define a plurality of respective orders in which elemental operations that define a matrix multiplication operation are to be performed during a plurality of respective implementations of the matrix multiplication operation, are defined. The plurality of tiling strategies are defined by taking into consideration dimensions of first and second matrices that the matrix multiplication operation is configured to multiply. The dimensions of the first matrix may include any suitable number of dimensions (e.g., 2, 3, 4, or 5). The dimensions of the second matrix may include any suitable number of dimensions (e.g., 2, 3, 4, or 5).

In an example implementation, the tiling strategy logic 522 defines the plurality of tiling strategies by taking into consideration the dimensions of first and second matrices that the matrix multiplication operation is configured to multiply. In an aspect, matrix information 530 indicates (e.g., specifies) the dimensions of first and second matrices. In accordance with this aspect, the tiling strategy logic 522 defines the plurality of tiling strategies based on (e.g., based at least on) the dimensions of first and second matrices, as indicated by the matrix information 530. In accordance with this implementation, the tiling strategy logic 522 generates tiling strategy information 536, which indicates (e.g., specifies or describes) the plurality of tiling strategies. In an aspect, the tiling strategy information 536 indicates the plurality of respective orders in which elemental operations that define the matrix multiplication operation are to be performed during the plurality of respective implementations of the matrix multiplication operation.

At step 304, a plurality of respective estimated amounts of time, which are to be consumed by a kernel to perform the plurality of respective implementations of the matrix multiplication operation using the plurality of tiling strategies while running on a graphics processing unit, are calculated. The plurality of respective estimated amounts of time are calculated by performing a plurality of respective allocations of subsets of the elemental operations to streaming multiprocessors, which are included in the graphics processing unit, using the plurality of tiling strategies. The plurality of respective allocations take into consideration a number of the streaming multiprocessors, respective capabilities (e.g., processing capabilities and/or access capabilities) of the streaming multiprocessors, a number of the elemental operations, and the dimensions of the first and second matrices.

In an example implementation, the time estimation logic 524 calculates the plurality of respective estimated amounts of time, which are to be consumed by the kernel 516 to perform the plurality of respective implementations of the matrix multiplication operation using the plurality of tiling strategies while running on the graphics processing unit 510. In an aspect, the time estimation logic 524 calculates the plurality of respective estimated amounts of time by analyzing the tiling strategy information 536 to determine the tiling strategies. The time estimation logic 524 calculates the plurality of respective estimated amounts of time by performing the plurality of respective allocations of subsets of the elemental operations to the streaming multiprocessors 514 using the plurality of tiling strategies. The plurality of respective allocations take into consideration a number of the streaming multiprocessors 514, respective capabilities of the streaming multiprocessors 514, the number of the elemental operations, and the dimensions of the first and second matrices. In an aspect, GPU information 532 indicates (e.g., specifies) the number of the streaming multiprocessors 514 and the respective capabilities of the streaming multiprocessors 514. In accordance with this aspect, the tiling strategy information 536 indicates the number of the elemental operations and the dimensions of the first and second matrices (in addition to indicating the plurality of respective orders in which elemental operations that define the matrix multiplication operation are to be performed during the plurality of respective implementations of the matrix multiplication operation). In further accordance with this aspect, the time estimation logic 524 performs the plurality of respective allocations of subsets of the elemental operations to the streaming multiprocessors 514 by analyzing the GPU information 532 to determine the number of the streaming multiprocessors 514 and the respective capabilities of the streaming multiprocessors 514 and further by analyzing the tiling strategy information 536 to determine the number of the elemental operations, the dimensions of the first and second matrices, and the plurality of respective orders in which elemental operations that define the matrix multiplication operation are to be performed during the plurality of respective implementations of the matrix multiplication operation. The time estimation logic 524 generates time estimation information 538, which indicates the plurality of respective estimated amounts of time that are to be consumed by the kernel 516 to perform the plurality of respective implementations of the matrix multiplication operation using the plurality of tiling strategies. Accordingly, the time estimation information 538 cross-references the plurality of respective estimated amounts of time with the plurality of tiling strategies.

In an example embodiment, the plurality of tiling strategies indicate a plurality of respective numbers of times that a memory access operation is performed during the plurality of respective implementations of the matrix multiplication operation. In accordance with this embodiment, the plurality of respective estimated amounts of time are calculated at step 304 by taking into consideration the plurality of respective numbers of times that the memory access operation is performed during the plurality of respective implementations of the matrix multiplication operation. In an aspect, the numbers of times are determined based on a data type used by the first and second matrices and a number of bytes that each streaming multiprocessor is capable of reading or writing per unit of time.

At step 306, the kernel is configured to implement an identified tiling strategy of the plurality of tiling strategies to perform a subsequent implementation of the matrix multiplication operation as a result of an estimated amount of time associated with the identified tiling strategy being no greater than (e.g., being less than) an estimated amount of time associated with each other tiling strategy of the plurality of tiling strategies. In an aspect, the kernel is configured to implement the identified tiling strategy as a result of the estimated amount of time that is to be consumed by the kernel to perform the subsequent implementation of the matrix multiplication operation using the identified tiling strategy being no greater than the estimated amount of time that is to be consumed by the kernel to perform the subsequent implementation of the matrix multiplication operation using each other tiling strategy of the plurality of tiling strategies.

In an example implementation, the kernel configuration logic 526 configures the kernel 516 to implement the identified tiling strategy to perform the subsequent implementation of the matrix multiplication operation as a result of the estimated amount of time associated with the identified tiling strategy being no greater than the estimated amount of time associated with each other tiling strategy of the plurality of tiling strategies. In an aspect, the kernel configuration logic 526 configures the kernel 516 to implement the identified tiling strategy as a result of the estimated amount of time that is to be consumed by the kernel 516 to perform the subsequent implementation of the matrix multiplication operation using the identified tiling strategy being no greater than the estimated amount of time that is to be consumed by the kernel 516 to perform the subsequent implementation of the matrix multiplication operation using each other tiling strategy of the plurality of tiling strategies. In an aspect, the kernel configuration logic 526 analyzes the time estimation information 538 to determine the plurality of respective estimated amounts of time that are associated with the plurality of respective implementations of the matrix multiplication operation. By analyzing the time estimation information 538, the kernel configuration logic 526 determines an identified estimated amount of time that is no greater than the other estimated amounts of time and selects the identified tiling strategy for implementation in the kernel 516 by determining that the time estimation information 538 cross-references the identified estimated amount of time with the identified tiling strategy.

In an example split-K embodiment, the dimensions of the first and second matrices include first dimensions of the first matrix and second dimensions of the second matrix. In accordance with the split-K embodiment, the first dimensions include an M dimension and a K dimension. In further accordance with the split-K embodiment, the second dimensions include the K dimension and an N dimension. In further accordance with the split-K embodiment, the identified tiling strategy is configured to utilize a split-K technique in which the K dimension is split into multiple portions, which correspond to respective subsets of the elemental operations that are allocated to respective subsets of the streaming multiprocessors. In an aspect, a first subset of the elemental operations is allocated to a first subset of the streaming multiprocessors; a second subset of the elemental operations is allocated to a second subset of the streaming multiprocessors, and so on.

In a stream-K implementation of the split-K embodiment, the initial tiling strategy is configured to utilize a stream-K technique that increases a uniformity with which an identified subset of the elemental operations that is allocated to a designated subset of the streaming multiprocessors is allocated across the streaming multiprocessors by allocating at least a portion of the identified subset of the elemental operations to a specified subset of the streaming multiprocessors. The specified subset of the streaming multiprocessors is external to the designated subset. In accordance with the stream-K implementation, the respective subsets of the elemental operations include the identified subset of the elemental operations. In further accordance with the stream-K implementation, the respective subsets of the streaming multiprocessors include the designated subset of the streaming multiprocessors and the specified subset of the streaming multiprocessors. In an example, the identified tiling strategy is configured to utilize the stream-K technique as a result of a determination that the specified subset of the streaming multiprocessors is being utilized to an extent that is less than an extent threshold (e.g., to an extent that is less than the extent threshold for a duration of time that is greater than or equal to a duration threshold). The duration threshold may be a designated number of seconds, minutes, hours, or days.

In some example embodiments, one or more steps 302, 304, and/or 306 of flowchart 300 may not be performed. Moreover, steps in addition to or in lieu of steps 302, 304, and/or 306 may be performed. For instance, in an example reference embodiment, the method of flowchart 300 further includes measuring a reference amount of time that the kernel, which is configured to implement an initial tiling strategy, consumes to perform an initial implementation of the matrix multiplication operation using the initial tiling strategy while running on the graphics processing unit. The initial tiling strategy defines an initial order in which the elemental operations that define the matrix multiplication operation are performed during the initial implementation. In an example implementation, the time measurement logic 528 measures a reference amount of time that the kernel 516, which is configured to implement the initial tiling strategy, consumes to perform the initial implementation of the matrix multiplication operation using the initial tiling strategy while running on the graphics processing unit 510. In an aspect, the time measurement logic 528 performs (e.g., takes) a time measurement 534 to determine the reference amount of time. The time measurement logic 528 generates reference time information 540, which indicates the reference amount of time.

In accordance with the reference embodiment mentioned above, configuring the kernel at step 306 includes increasing an efficiency with which the kernel multiplies the first and second matrices by reconfiguring the kernel to implement the identified tiling strategy, in lieu of the initial tiling strategy, to perform the subsequent implementation of the matrix multiplication operation. The kernel is reconfigured to implement the identified tiling strategy in lieu of the initial tiling strategy as a result of the estimated amount of time associated with the identified tiling strategy being no greater than the reference amount of time. In an example implementation, the kernel configuration logic 526 reconfigures the kernel 516 to implement the identified tiling strategy in lieu of the initial tiling strategy as a result of the estimated amount of time associated with the identified tiling strategy being no greater than the reference amount of time. In an aspect, the kernel configuration logic 526 compares the estimated amount of time associated with the identified tiling strategy, as indicated by the time estimation information 538, and the reference amount of time, as indicated by the reference time information 540, to determine that the estimated amount of time associated with the identified tiling strategy is no greater than the reference amount of time.

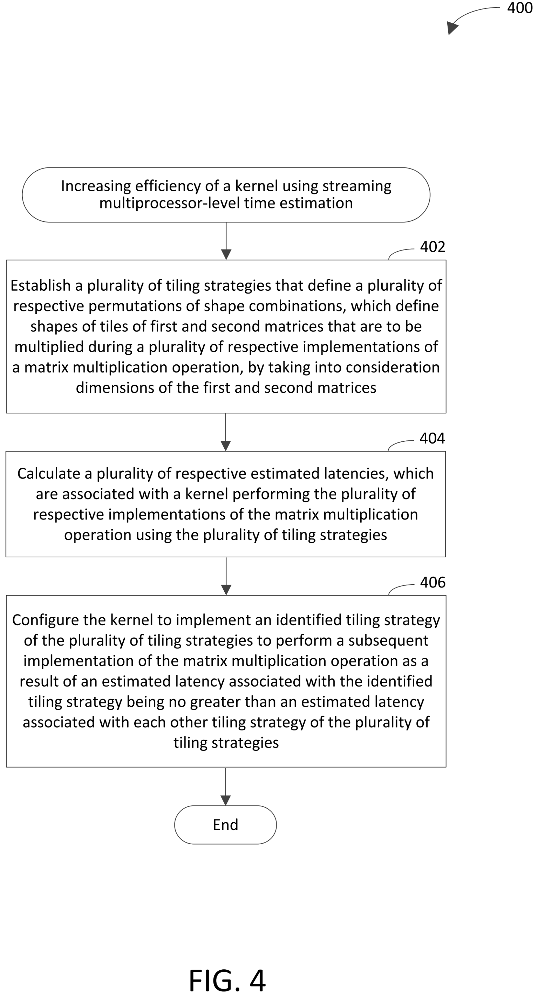

As shown in FIG. 4, the method of flowchart 400 begins at step 402. In step 402, a plurality of tiling strategies that define a plurality of respective permutations of shape combinations are established. The permutations of the shape combinations define shapes of tiles of first and second matrices that are to be multiplied during a plurality of respective implementations of a matrix multiplication operation that is configured to multiply the first and second matrices. The plurality of tiling strategies are established by taking into consideration dimensions of the first and second matrices. The dimensions of the first matrix may include any suitable number of dimensions (e.g., 2, 3, 4, or 5). The dimensions of the second matrix may include any suitable number of dimensions (e.g., 2, 3, 4, or 5).

In an example implementation, the tiling strategy logic 522 establishes the plurality of tiling strategies by taking into consideration the dimensions of the first and second matrices. In an aspect, matrix information 530 indicates (e.g., specifies) the dimensions of the first and second matrices. In accordance with this aspect, the tiling strategy logic 522 establishes the plurality of tiling strategies based on (e.g., based at least on) the dimensions of the first and second matrices, as indicated by the matrix information 530. In accordance with this implementation, the tiling strategy logic 522 generates tiling strategy information 536, which indicates (e.g., specifies or describes) the plurality of tiling strategies. In an aspect, the tiling strategy information 536 indicates the plurality of respective permutations of shape combinations corresponding to the plurality of respective implementations of the matrix multiplication operation. In another aspect, the tiling strategy information 536 indicates a first number of tiles of the first matrix and a second number of tiles of the second matrix that are to be multiplied for each implementation of the matrix multiplication operation. In yet another aspect, the tiling strategy information 536 indicates which elements of the first matrix are included in each of the tiles of the first matrix and which elements of the second matrix are included in each of the tiles of the second matrix for each tiling strategy.

In an example embodiment, the plurality of tiling strategies further define a plurality of respective orders in which elemental operations that define the matrix multiplication operation are to be performed during the plurality of respective implementations of the matrix multiplication operation.

At step 404, a plurality of respective estimated latencies are calculated. The plurality of respective estimated latencies are associated with a kernel performing the plurality of respective implementations of the matrix multiplication operation using the plurality of tiling strategies while running on a graphics processing unit. The plurality of respective estimated latencies are calculated by allocating elemental operations that define the matrix multiplication operation across streaming multiprocessors in the graphics processing unit in conformance with the plurality of tiling strategies utilizing a number of the streaming multiprocessors, respective capabilities of the streaming multiprocessors, and a number of the elemental operations. In an aspect, the capabilities of the streaming multiprocessors include processing capabilities of the streaming multiprocessors (e.g., a number of elemental operations that each streaming multiprocessor is capable of performing per unit of time) and/or accessing capabilities of the streaming multiprocessors (e.g., a number of bytes that each streaming multiprocessor is capable of reading or writing per unit of time).

In another example embodiment, an estimated latency associated with a streaming multiprocessor performing (e.g., executing) a subset of the elemental operations that define the matrix multiplication operation is calculated based on (e.g., based at least on) a first value and/or a second value. The first value is equal to a number of the elemental operations that are included in the subset divided by a number of elemental operations that the streaming multiprocessor is capable of performing per unit of time (e.g., per second). The second value is equal to a number of bytes that are to be read or written by the multiprocessor with regard to performing the subset of the elemental operations divided by a number of bytes that the streaming multiprocessor is capable of reading or writing per unit of time. In an aspect, the estimated latency associated with the streaming multiprocessor performing the subset of the elemental operations is equal to a sum of the first value and the second value. The unit of measurement for the first value and the second value is the unit of time. In an aspect, for each tiling strategy, the streaming multiprocessors performing their respective subsets of the elemental operations in parallel result in respective estimated latencies. In accordance with this aspect, for each tiling strategy, the estimated latencies associated with the respective streaming multiprocessors include an identified estimated latency that is greater than each other estimated latency. In further accordance with this aspect, the identified estimated latency for each tiling strategy is designated as the respective estimated latency associated with the kernel performing the respective implementation of the matrix multiplication operation using the respective tiling strategy while running on the graphics processing unit.

In an example implementation, the time estimation logic 524 calculates the plurality of respective estimated latencies, which are associated with the kernel 516 performing the plurality of respective implementations of the matrix multiplication operation using the plurality of tiling strategies while running on the graphics processing unit 510. In an aspect, the time estimation logic 524 calculates the plurality of respective estimated latencies by analyzing the tiling strategy information 536 to determine the tiling strategies. The time estimation logic 524 calculates the plurality of respective estimated latencies by allocating the elemental operations that define the matrix multiplication operation across the streaming multiprocessors 514 in conformance with the plurality of tiling strategies utilizing a number of the streaming multiprocessors 514, respective capabilities of the streaming multiprocessors 514, and the number of the elemental operations. In an aspect, GPU information 532 indicates (e.g., specifies) the number of the streaming multiprocessors 514 and the respective capabilities of the streaming multiprocessors 514. In accordance with this aspect, the tiling strategy information 536 indicates the number of the elemental operations. In further accordance with this aspect, the time estimation logic 524 allocates the elemental operations across the streaming multiprocessors 514 by analyzing the GPU information 532 to determine the number of the streaming multiprocessors 514 and the respective capabilities of the streaming multiprocessors 514 and further by analyzing the tiling strategy information 536 to determine the number of the elemental operations. The time estimation logic 524 generates time estimation information 538, which indicates the plurality of respective estimated latencies that are associated with the kernel 516 performing the plurality of respective implementations of the matrix multiplication operation using the plurality of tiling strategies. Accordingly, the time estimation information 538 cross-references the plurality of respective estimated latencies with the plurality of tiling strategies.

In an example embodiment, the plurality of tiling strategies indicate a plurality of respective numbers of times that a memory access operation is performed during the plurality of respective implementations of the matrix multiplication operation. In accordance with this embodiment, the plurality of respective estimated latencies are calculated at step 404 by taking into consideration the plurality of respective numbers of times that the memory access operation is performed during the plurality of respective implementations of the matrix multiplication operation. In an aspect, the numbers of times are determined based on a data type used by the first and second matrices and a number of bytes that each streaming multiprocessor is capable of reading or writing per unit of time.

At step 406, the kernel is configured to implement an identified tiling strategy of the plurality of tiling strategies to perform a subsequent implementation of the matrix multiplication operation as a result of an estimated latency associated with the identified tiling strategy being no greater than (e.g., being less than) an estimated latency associated with each other tiling strategy of the plurality of tiling strategies. In an aspect, the kernel is configured to implement the identified tiling strategy as a result of the estimated latency associated with the kernel performing the subsequent implementation of the matrix multiplication operation using the identified tiling strategy being no greater than the estimated latency associated with the kernel performing the subsequent implementation of the matrix multiplication operation using each other tiling strategy of the plurality of tiling strategies.

In an example implementation, the kernel configuration logic 526 configures the kernel 516 to implement the identified tiling strategy of the plurality of tiling strategies to perform the subsequent implementation of the matrix multiplication operation as a result of the estimated latency associated with the identified tiling strategy being no greater than the estimated latency associated with each other tiling strategy of the plurality of tiling strategies. In an aspect, the kernel configuration logic 526 configures the kernel 516 to implement the identified tiling strategy as a result of the estimated latency associated with the kernel 516 performing the subsequent implementation of the matrix multiplication operation using the identified tiling strategy being no greater than the estimated latency associated with the kernel 516 performing the subsequent implementation of the matrix multiplication operation using each other tiling strategy of the plurality of tiling strategies. In an aspect, the kernel configuration logic 526 analyzes the time estimation information 538 to determine the plurality of respective estimated latencies that are associated with the kernel 516 performing the plurality of respective implementations of the matrix multiplication operation using the plurality of tiling strategies. By analyzing the time estimation information 538, the kernel configuration logic 526 determines an identified estimated latency that is no greater than the other estimated latencies and selects the identified tiling strategy for implementation in the kernel 516 by determining that the identified estimated latency is cross-referenced with the identified tiling strategy.

In an example split-K embodiment, the dimensions of the first and second matrices include first dimensions of the first matrix and second dimensions of the second matrix. In accordance with the split-K embodiment, the first dimensions including an M dimension and a K dimension. In further accordance with the split-K embodiment, the second dimensions including the K dimension and an N dimension. In further accordance with the split-K embodiment, the identified tiling strategy is configured to utilize a split-K technique in which the K dimension is split into multiple portions that correspond to respective portions of a first tile of the first matrix and that further correspond to respective portions of a second tile of the second matrix. In an aspect, the split-K technique is utilized to calculate partial sums with respect to the k dimension, which correspond to the respective portions of the first tile and that further correspond to the respective portions of the second tile, and to sum the partial sums.

In a stream-K implementation of the split-K embodiment, the identified tiling strategy is configured to utilize a stream-K technique that increases a uniformity with which a portion of the elemental operations, which is configured to multiply the first tile and the second tile, is allocated across the streaming multiprocessors. In an example, the uniformity is increased by increasing a number of streaming multiprocessors across which the portion of the elemental operations is allocated. In another example, the identified tiling strategy is configured to utilize the stream-K technique as a result of a determination that one or more identified streaming multiprocessors, which are included in the streaming multiprocessors, are being utilized to an extent that is less than an extent threshold. In accordance with this example, configuring the identified tiling strategy to utilize the stream-K technique includes distributing the portion of the elemental operations across a subset of the streaming multiprocessors that includes the one or more identified streaming multiprocessors. In yet another example, a first subset of the portion is allocated to a first streaming multiprocessor; a second subset of the portion is allocated to a second streaming multiprocessor, and so on. It will be recognized that the portion may be allocated across fewer than all of the streaming multiprocessors or across all of the streaming multiprocessors.

In some example embodiments, one or more steps 402, 404, and/or 406 of flowchart 400 may not be performed. Moreover, steps in addition to or in lieu of steps 402, 404, and/or 406 may be performed. For instance, in an example reference embodiment, the method of flowchart 400 further includes measuring a reference latency associated with the kernel, which is configured to implement an initial tiling strategy, performing an initial implementation of the matrix multiplication operation using the initial tiling strategy while running on the graphics processing unit. The initial tiling strategy defines shapes of initial tiles of the first and second matrices that are multiplied during the initial implementation. In an example implementation, the time measurement logic 528 measures a reference latency associated with the kernel 516, which is configured to implement the initial tiling strategy, performing the initial implementation of the matrix multiplication operation using the initial tiling strategy while running on the graphics processing unit 510. In an aspect, the time measurement logic 528 performs (e.g., takes) a time measurement 534 to determine the reference latency. The time measurement logic 528 generates reference time information 540, which indicates the reference latency.

In accordance with the reference embodiment mentioned above, configuring the kernel at step 406 includes increasing an efficiency with which the kernel multiplies the first and second matrices by reconfiguring the kernel to implement the identified tiling strategy of the plurality of tiling strategies, in lieu of the initial tiling strategy, to perform the subsequent implementation of the matrix multiplication operation. The kernel is reconfigured to implement the identified tiling strategy in lieu of the initial tiling strategy as a result of the estimated latency associated with the kernel performing the subsequent implementation of the matrix multiplication operation using the identified tiling strategy being no greater than the reference latency. In an example implementation, the kernel configuration logic 526 reconfigures the kernel 516 to implement the identified tiling strategy in lieu of the initial tiling strategy as a result of the estimated latency associated with the kernel 516 performing the subsequent implementation of the matrix multiplication operation using the identified tiling strategy being no greater than the reference latency. In an aspect, the kernel configuration logic 526 compares the estimated latency associated with the kernel 516 performing the subsequent implementation of the matrix multiplication operation using the identified tiling strategy, as indicated by the time estimation information 538, and the reference latency, as indicated by the reference time information 540, to determine that the estimated latency associated with the kernel 516 performing the subsequent implementation of the matrix multiplication operation using the identified tiling strategy is no greater than the reference latency.

It will be recognized that the computing system 500 may not include one or more of the time estimation-based kernel configuration logic 508, the graphics processing unit 510, the store 512, the streaming multiprocessors 514, the tiling strategy logic 522, the time estimation logic 524, the kernel configuration logic 526, and/or the time measurement logic 528. Furthermore, the computing system 500 may include components in addition to or in lieu of the time estimation-based kernel configuration logic 508, the graphics processing unit 510, the store 512, the streaming multiprocessors 514, the tiling strategy logic 522, the time estimation logic 524, the kernel configuration logic 526, and/or the time measurement logic 528.

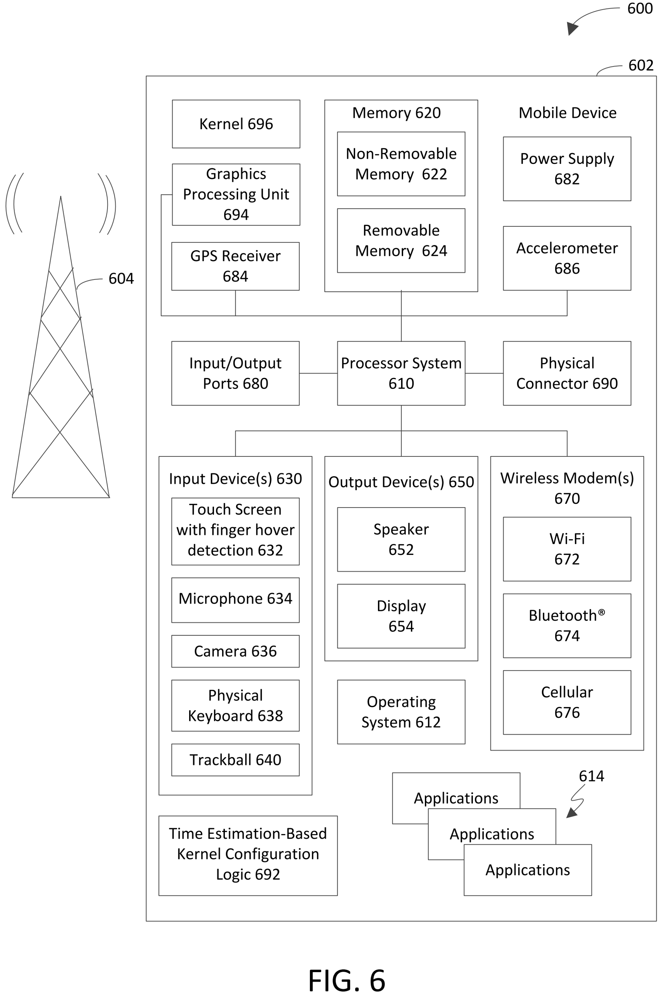

FIG. 6 is a system diagram of an example mobile device 600 including a variety of optional hardware and software components, shown generally as 602. Any components 602 in the mobile device may communicate with any other component, though not all connections are shown, for ease of illustration. The mobile device 600 may be any of a variety of computing devices (e.g., cell phone, smartphone, handheld computer, Personal Digital Assistant (PDA), etc.) and may allow wireless two-way communications with one or more mobile communications networks 604, such as a cellular or satellite network, or with a local area or wide area network.

The mobile device 600 includes a processor system 610 (e.g., signal processor, microprocessor, ASIC, or other control and processing logic circuitry) for performing such tasks as signal coding, data processing, input/output processing, power control, and/or other functions. An operating system 612 may control the allocation and usage of the components 602 and support for one or more applications 614 (a.k.a. application programs). The applications 614 may include common mobile computing applications (e.g., email applications, calendars, contact managers, web browsers, messaging applications) and any other computing applications (e.g., word processing applications, mapping applications, media player applications).

The mobile device 600 includes time estimation-based kernel configuration logic 692, which is operable in a manner similar to the time estimation-based kernel configuration logic 108 described above with reference to FIG. 1 and/or the time estimation-based kernel configuration logic 508 described above with reference to FIG. 5. The mobile device 600 includes a graphics processing unit 694, which is operable in a manner similar to the graphics processing unit 110 described above with reference to FIG. 1 and/or the graphics processing unit 510 described above with reference to FIG. 5. The mobile device 600 includes a kernel 696, which is operable in a manner similar to the kernel 116 described above with reference to FIG. 1 and/or the kernel 516 described above with reference to FIG. 5.

The mobile device 600 includes memory 620. The memory 620 may include non-removable memory 622 and/or removable memory 624. The non-removable memory 622 may include random access memory (RAM), read-only memory (ROM), flash memory, a hard disk, or other well-known memory storage technologies. The removable memory 624 may include flash memory or a Subscriber Identity Module (SIM) card, which is well known in Global System for Mobile Communications (GSM) systems, or other well-known memory storage technologies, such as "smart cards." The memory 620 may store data and/or code for running the operating system 612 and the applications 614. Example data may include web pages, text, images, sound files, video data, or other data sets to be sent to and/or received from one or more network servers or other devices via one or more wired or wireless networks. Memory 620 may store a subscriber identifier, such as an International Mobile Subscriber Identity (IMSI), and an equipment identifier, such as an International Mobile Equipment Identifier (IMEI). Such identifiers may be transmitted to a network server to identify users and equipment.

The mobile device 600 may support one or more input devices 630, such as a touch screen 632, microphone 634, camera 636, physical keyboard 638 and/or trackball 640 and one or more output devices 650, such as a speaker 652 and a display 654. Touch screens, such as the touch screen 632, may detect input in different ways. For example, capacitive touch screens detect touch input when an object (e.g., a fingertip) distorts or interrupts an electrical current running across the surface. As another example, touch screens may use optical sensors to detect touch input when beams from the optical sensors are interrupted. Physical contact with the surface of the screen is not necessary for input to be detected by some touch screens. For example, the touch screen 632 may support a finger hover detection using capacitive sensing, as is well understood. Other detection techniques may be used, including camera-based detection and ultrasonic-based detection. To implement a finger hover, a user's finger is typically within a predetermined spaced distance above the touch screen, such as between 0.1 to 0.25 inches, or between 0.25 inches and 0.5 inches, or between 0.5 inches and 0.75 inches, or between 0.75 inches and 1 inch, or between 1 inch and 1.5 inches, etc.

Other possible output devices (not shown) may include piezoelectric or other haptic output devices. Some devices may serve more than one input/output function. For example, touch screen 632 and display 654 may be combined in a single input/output device. The input devices 630 may include a Natural User Interface (NUI). An NUI is any interface technology that enables a user to interact with a device in a "natural" manner, free from artificial constraints imposed by input devices such as mice, keyboards, remote controls, and the like. Examples of NUI methods include those relying on speech recognition, touch and stylus recognition, gesture recognition both on screen and adjacent to the screen, air gestures, head and eye tracking, voice and speech, vision, touch, gestures, and machine intelligence. Other examples of a NUI include motion gesture detection using accelerometers/gyroscopes, facial recognition, 3D displays, head, eye, and gaze tracking, immersive augmented reality and virtual reality systems, all of which provide a more natural interface, as well as technologies for sensing brain activity using electric field sensing electrodes (EEG and related methods). Thus, in one specific example, the operating system 612 or applications 614 may include speech-recognition software as part of a voice control interface that allows a user to operate the mobile device 600 via voice commands. Furthermore, the mobile device 600 may include input devices and software that allows for user interaction via a user's spatial gestures, such as detecting and interpreting gestures to provide input to a gaming application.

Wireless modem(s) 670 may be coupled to antenna(s) (not shown) and may support two-way communications between the processor system 610 and external devices, as is well understood in the art. The modem(s) 670 are shown generically and may include a cellular modem 676 for communicating with the mobile communication network 604 and/or other radio-based modems (e.g., Bluetooth^{®} 674 and/or Wi-Fi 672). At least one of the wireless modem(s) 670 is typically configured for communication with one or more cellular networks, such as a GSM network for data and voice communications within a single cellular network, between cellular networks, or between the mobile device and a public switched telephone network (PSTN).

The mobile device 600 may further include at least one input/output port 680, a power supply 682, a satellite navigation system receiver 684, such as a Global Positioning System (GPS) receiver, an accelerometer 686, and/or a physical connector 690, which may be a universal serial bus (USB) port, IEEE 1394 (FireWire) port, and/or RS-232 port. The illustrated components 602 are not required or all-inclusive, as any components may be deleted and other components may be added as would be recognized by one skilled in the art.

Although the operations of some of the disclosed methods are described in a particular, sequential order for convenient presentation, it should be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods may be used in conjunction with other methods.

Any one or more of the time estimation-based kernel configuration logic 108, the time estimation-based kernel configuration logic 508, the tiling strategy logic 522, the time estimation logic 524, the kernel configuration logic 526, the time measurement logic 528, flowchart 200, flowchart 300, and/or flowchart 400 may be implemented in hardware, software, firmware, or any combination thereof.

For example, any one or more of the time estimation-based kernel configuration logic 108, the time estimation-based kernel configuration logic 508, the tiling strategy logic 522, the time estimation logic 524, the kernel configuration logic 526, the time measurement logic 528, flowchart 200, flowchart 300, and/or flowchart 400 may be implemented, at least in part, as computer program code configured to be executed in one or more processors.

In another example, any one or more of the time estimation-based kernel configuration logic 108, the time estimation-based kernel configuration logic 508, the tiling strategy logic 522, the time estimation logic 524, the kernel configuration logic 526, the time measurement logic 528, flowchart 200, flowchart 300, and/or flowchart 400 may be implemented, at least in part, as hardware logic/electrical circuitry. Such hardware logic/electrical circuitry may include one or more hardware logic components. Examples of a hardware logic component include but are not limited to a field-programmable gate array (FPGA), an application-specific integrated circuit (ASIC), an application-specific standard product (ASSP), a system-on-a-chip system (SoC), a complex programmable logic device (CPLD), etc. For instance, a SoC may include an integrated circuit chip that includes one or more of a processor (e.g., a microcontroller, microprocessor, digital signal processor (DSP), etc.), memory, one or more communication interfaces, and/or further circuits and/or embedded firmware to perform its functions.

### II. Further Discussion of Some Example Embodiments

(A1) An example system (Figure 1, 102A-102M, 106A-106N; Figure 5, 500; Figure 6, 602; Figure 7, 700) comprises a processor system (Figure 6, 610; Figure 7, 702) and a memory (Figure 6, 620, 622, 624; Figure 7, 704, 708, 710) that stores computer-executable instructions. The computer-executable instructions are executable by the processor system to at least define (Figure 2, 202) a plurality of tiling strategies, which define respective sizes of first tiles in a first matrix and respective sizes of second tiles in a second matrix that are to be utilized during a plurality of respective implementations of a matrix multiplication operation that is configured to multiply the first tiles and the second tiles, by taking into consideration first dimensions of the first matrix and second dimensions of the second matrix. The computer-executable instructions are executable by the processor system to at least calculate (Figure 2, 204) a plurality of respective estimated amounts of time, which are to be consumed by a kernel (Figure 1, 116; Figure 5, 516; Figure 6, 696) to perform the plurality of respective implementations of the matrix multiplication operation using the plurality of tiling strategies while running on a graphics processing unit (Figure 1, 110; Figure 5, 510; Figure 6, 694), by performing a plurality of respective allocations of subsets of elemental operations that define the matrix multiplication operation to streaming multiprocessors (Figure 1, 114; Figure 5, 514), which are included in the graphics processing unit, in accordance with the plurality of tiling strategies. The plurality of respective allocations take into consideration a number of the streaming multiprocessors, respective capabilities of the streaming multiprocessors, and a number of the elemental operations. The computer-executable instructions are executable by the processor system to at least configure (Figure 2, 206) the kernel to implement an identified tiling strategy of the plurality of tiling strategies to perform a subsequent implementation of the matrix multiplication operation as a result of an estimated amount of time that is to be consumed by the kernel to perform the subsequent implementation of the matrix multiplication operation using the identified tiling strategy being no greater than an estimated amount of time that is to be consumed by the kernel to perform the subsequent implementation of the matrix multiplication operation using each other tiling strategy of the plurality of tiling strategies.

(A2) In the example system of A1, wherein the computer-executable instructions are executable by the processor system to at least: measure a reference amount of time that the kernel, which is configured to implement an initial tiling strategy, consumes to perform an initial implementation of the matrix multiplication operation using the initial tiling strategy while running on the graphics processing unit, the initial tiling strategy defining an initial size of the first tiles and an initial size of the second tiles utilized during the initial implementation; and increase an efficiency with which the kernel multiplies the first matrix and the second matrix by reconfiguring the kernel to implement the identified tiling strategy, in lieu of the initial tiling strategy, to perform the subsequent implementation of the matrix multiplication operation as a result of the estimated amount of time that is to be consumed by the kernel to perform the subsequent implementation of the matrix multiplication operation using the identified tiling strategy being no greater than the reference amount of time.

(A3) In the example system of any of A1-A2, wherein the plurality of tiling strategies further define a plurality of respective orders in which the elemental operations that define the matrix multiplication operation are to be performed during the plurality of respective implementations of the matrix multiplication operation.

(A4) In the example system of any of A1-A3, wherein the plurality of tiling strategies indicate a plurality of respective numbers of times that a memory access operation is performed during the plurality of respective implementations of the matrix multiplication operation; and wherein the computer-executable instructions are executable by the processor system to at least: calculate the plurality of respective estimated amounts of time by taking into consideration the plurality of respective numbers of times that the memory access operation is performed during the plurality of respective implementations of the matrix multiplication operation.

(A5) In the example system of any of A1-A4, wherein the first dimensions of the first matrix include an M dimension and a K dimension; wherein the second dimensions of the second matrix include the K dimension and an N dimension; and wherein the identified tiling strategy is configured to utilize a split-K technique in which the K dimension is split into multiple portions that correspond to respective portions of a designated first tile of the first matrix and that further correspond to respective portions of a designated second tile of the second matrix.

(A6) In the example system of any of A1-A5, wherein the identified tiling strategy is configured to utilize a stream-K technique that increases a uniformity with which a portion of the elemental operations, which is configured to multiply the designated first tile and the designated second tile, is allocated across the streaming multiprocessors.

(A7) In the example system of any of A1-A6, wherein the first matrix is a first two-dimensional matrix, and wherein the second matrix is a second two-dimensional matrix.

(A8) In the example system of any of A1-A7, wherein the first matrix is a first three-dimensional matrix, and wherein the second matrix is a second three-dimensional matrix.

(A9) In the example system of any of A1-A8, wherein the first matrix is a first four-dimensional matrix, and wherein the second matrix is a second four-dimensional matrix.

(B1) An example method is implemented by a computing system (Figure 1, 102A-102M, 106A-106N; Figure 5, 500; Figure 6, 602; Figure 7, 700). The method comprises defining (Figure 3, 302) a plurality of tiling strategies, which define a plurality of respective orders in which elemental operations that define a matrix multiplication operation are to be performed during a plurality of respective implementations of the matrix multiplication operation, by taking into consideration dimensions of first and second matrices that the matrix multiplication operation is configured to multiply. The method further comprises calculating (Figure 3, 304) a plurality of respective estimated amounts of time, which are to be consumed by a kernel (Figure 1, 116; Figure 5, 516; Figure 6, 696) to perform the plurality of respective implementations of the matrix multiplication operation using the plurality of tiling strategies while running on a graphics processing unit (Figure 1, 110; Figure 5, 510; Figure 6, 694), by performing a plurality of respective allocations of subsets of the elemental operations to streaming multiprocessors (Figure 1, 114; Figure 5, 514), which are included in the graphics processing unit, using the plurality of tiling strategies. The plurality of respective allocations take into consideration a number of the streaming multiprocessors, respective capabilities of the streaming multiprocessors, a number of the elemental operations, and the dimensions of the first and second matrices. The method further comprises configuring (Figure 3, 306) the kernel to implement an identified tiling strategy of the plurality of tiling strategies to perform a subsequent implementation of the matrix multiplication operation as a result of an estimated amount of time that is to be consumed by the kernel to perform the subsequent implementation of the matrix multiplication operation using the identified tiling strategy being no greater than an estimated amount of time that is to be consumed by the kernel to perform the subsequent implementation of the matrix multiplication operation using each other tiling strategy of the plurality of tiling strategies.

(B2) In the example method of B1, further comprising: measuring a reference amount of time that the kernel, which is configured to implement an initial tiling strategy, consumes to perform an initial implementation of the matrix multiplication operation using the initial tiling strategy while running on the graphics processing unit, the initial tiling strategy defining an initial order in which the elemental operations that define the matrix multiplication operation are performed during the initial implementation; wherein configuring the kernel comprises: increasing an efficiency with which the kernel multiplies the first and second matrices by reconfiguring the kernel to implement the identified tiling strategy, in lieu of the initial tiling strategy, to perform the subsequent implementation of the matrix multiplication operation as a result of the estimated amount of time that is to be consumed by the kernel to perform the subsequent implementation of the matrix multiplication operation using the identified tiling strategy being no greater than the reference amount of time.

(B3) In the example method of any of B1-B2, wherein the plurality of tiling strategies indicate a plurality of respective numbers of times that a memory access operation is performed during the plurality of respective implementations of the matrix multiplication operation; and wherein calculating the plurality of respective estimated amounts of time comprises: calculating the plurality of respective estimated amounts of time by taking into consideration the plurality of respective numbers of times that the memory access operation is performed during the plurality of respective implementations of the matrix multiplication operation.

(B4) In the example method of any of B1-B3, wherein the dimensions of the first and second matrices include first dimensions of the first matrix and second dimensions of the second matrix, the first dimensions including an M dimension and a K dimension, the second dimensions including the K dimension and an N dimension; and wherein the identified tiling strategy is configured to utilize a split-K technique in which the K dimension is split into multiple portions, which correspond to respective subsets of the elemental operations that are allocated to respective subsets of the streaming multiprocessors.

(B5) In the example method of any of B1-B4, wherein the initial tiling strategy is configured to utilize a stream-K technique that increases a uniformity with which an identified subset of the elemental operations that is allocated to a designated subset of the streaming multiprocessors is allocated across the streaming multiprocessors by allocating at least a portion of the identified subset of the elemental operations to another subset of the streaming multiprocessors that is external to the designated subset; wherein the respective subsets of the elemental operations include the identified subset of the elemental operations; and wherein the respective subsets of the streaming multiprocessors include the designated subset of the streaming multiprocessors.

(B6) In the example method of any of B1-B5, wherein each of the first and second matrices is a two-dimensional matrix.

(B7) In the example method of any of B1-B6, wherein each of the first and second matrices is a three-dimensional matrix.

(B8) In the example method of any of B1-B7, wherein each of the first and second matrices is a four-dimensional matrix.

(C1) An example computer program product (Figure 6, 624; Figure 7, 718, 722) comprises a computer-readable storage medium having instructions recorded thereon for enabling a processor-based system (Figure 1, 102A-102M, 106A-106N; Figure 5, 500; Figure 6, 602; Figure 7, 700) to perform operations. The operations comprise establishing (Figure 4, 402) a plurality of tiling strategies that define a plurality of respective permutations of shape combinations, which define shapes of tiles of first and second matrices that are to be multiplied during a plurality of respective implementations of a matrix multiplication operation that is configured to multiply the first and second matrices, by taking into consideration dimensions of the first and second matrices. The operations further comprise calculating (Figure 4, 404) a plurality of respective estimated latencies, which are associated with a kernel (Figure 1, 116; Figure 5, 516; Figure 6, 696) performing the plurality of respective implementations of the matrix multiplication operation using the plurality of tiling strategies while running on a graphics processing unit (Figure 1, 110; Figure 5, 510; Figure 6, 694), by allocating elemental operations that define the matrix multiplication operation across streaming multiprocessors (Figure 1, 114; Figure 5, 514) in the graphics processing unit in conformance with the plurality of tiling strategies utilizing a number of the streaming multiprocessors, respective capabilities of the streaming multiprocessors, and a number of the elemental operations. The operations further comprise configuring (Figure 4, 406) the kernel to implement an identified tiling strategy of the plurality of tiling strategies to perform a subsequent implementation of the matrix multiplication operation as a result of an estimated latency associated with the kernel performing the subsequent implementation of the matrix multiplication operation using the identified tiling strategy being no greater than an estimated latency associated with the kernel performing the subsequent implementation of the matrix multiplication operation using each other tiling strategy of the plurality of tiling strategies.

(C2) In the example computer program product of C 1, wherein the operations comprise: measuring a reference latency associated with the kernel, which is configured to implement an initial tiling strategy, performing an initial implementation of the matrix multiplication operation using the initial tiling strategy while running on the graphics processing unit, the initial tiling strategy defining shapes of initial tiles of the first and second matrices that are multiplied during the initial implementation; and increasing an efficiency with which the kernel multiplies the first and second matrices by reconfiguring the kernel to implement the identified tiling strategy of the plurality of tiling strategies, in lieu of the initial tiling strategy, to perform the subsequent implementation of the matrix multiplication operation as a result of the estimated latency associated with the kernel performing the subsequent implementation of the matrix multiplication operation using the identified tiling strategy being no greater than the reference latency.

(C3) In the example computer program product of any of C1-C2, wherein the plurality of tiling strategies further define a plurality of respective orders in which the elemental operations that define the matrix multiplication operation are to be performed during the plurality of respective implementations of the matrix multiplication operation.

Techniques are described herein that are capable of increasing efficiency of a kernel using streaming multiprocessor-level time estimation. Tiling strategies for performing respective implementations of a matrix multiplication operation are defined by taking into consideration dimensions of first and second matrices that the matrix multiplication operation is configured to multiply. Estimated amounts of time or estimated latencies, which are associated with a kernel performing the respective implementations of the matrix multiplication operation using the respective tiling strategies, are calculated. The kernel is configured to implement an identified tiling strategy to perform a subsequent implementation of the matrix multiplication operation as a result of an estimated amount of time associated with the identified tiling strategy being no greater than an estimated amount of time associated with each other tiling strategy.

### III. Example Computer System

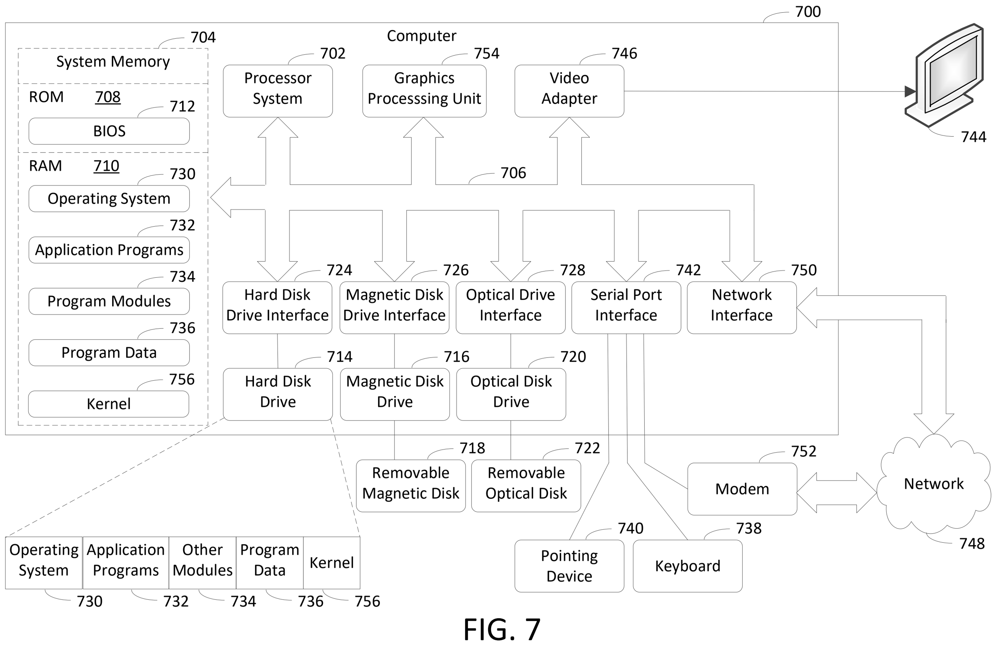

FIG. 7 depicts an example computer 700 in which embodiments may be implemented. Any one or more of the user devices 102A-102M and/or any one or more of the servers 106A-106N shown in FIG. 1 and/or the computing system 500 shown in FIG. 5 may be implemented using computer 700, including one or more features of computer 700 and/or alternative features. Computer 700 may be a general-purpose computing device in the form of a conventional personal computer, a mobile computer, or a workstation, for example, or computer 700 may be a special purpose computing device. The description of computer 700 provided herein is provided for purposes of illustration, and is not intended to be limiting. Embodiments may be implemented in further types of computer systems, as would be known to persons skilled in the relevant art(s).

As shown in FIG. 7, computer 700 includes a processor system 702, a system memory 704, and a bus 706 that couples various system components including system memory 704 to processor system 702. Bus 706 represents one or more of any of several types of bus structures, including a memory bus or memory controller, a peripheral bus, an accelerated graphics port, and a processor or local bus using any of a variety of bus architectures. System memory 704 includes read only memory (ROM) 708 and random access memory (RAM) 710. A basic input/output system 712 (BIOS) is stored in ROM 708.

Computer 700 also has one or more of the following drives: a hard disk drive 714 for reading from and writing to a hard disk, a magnetic disk drive 716 for reading from or writing to a removable magnetic disk 718, and an optical disk drive 720 for reading from or writing to a removable optical disk 722 such as a CD ROM, DVD ROM, or other optical media. Hard disk drive 714, magnetic disk drive 716, and optical disk drive 720 are connected to bus 706 by a hard disk drive interface 724, a magnetic disk drive interface 726, and an optical drive interface 728, respectively. The drives and their associated computer-readable storage media provide nonvolatile storage of computer-readable instructions, data structures, program modules and other data for the computer. Although a hard disk, a removable magnetic disk and a removable optical disk are described, other types of computer-readable storage media can be used to store data, such as flash memory cards, digital video disks, random access memories (RAMs), read only memories (ROM), and the like.

A number of program modules may be stored on the hard disk, magnetic disk, optical disk, ROM, or RAM. These programs include an operating system 730, one or more application programs 732, other program modules 734, program data 736, and a kernel 756. Application programs 732 or program modules 734 may include, for example, computer program logic for implementing any one or more of (e.g., at least a portion of) the time estimation-based kernel configuration logic 108, the time estimation-based kernel configuration logic 508, the tiling strategy logic 522, the time estimation logic 524, the kernel configuration logic 526, the time measurement logic 528, flowchart 200 (including any step of flowchart 200), flowchart 300 (including any step of flowchart 300), and/or flowchart 400 (including any step of flowchart 400), as described herein.

A user may enter commands and information into the computer 700 through input devices such as keyboard 738 and pointing device 740. Other input devices (not shown) may include a microphone, joystick, game pad, satellite dish, scanner, touch screen, camera, accelerometer, gyroscope, or the like. These and other input devices are often connected to the processor system 702 through a serial port interface 742 that is coupled to bus 706, but may be connected by other interfaces, such as a parallel port, game port, or a universal serial bus (USB).

A display device 744 (e.g., a monitor) is also connected to bus 706 via an interface, such as a video adapter 746. In addition to display device 744, computer 700 may include other peripheral output devices (not shown) such as speakers and printers.

Computer 700 is connected to a network 748 (e.g., the Internet) through a network interface 750 (e.g., a network or adapter), a modem 752, or other means for establishing communications over the network. Modem 752, which may be internal or external, is connected to bus 706 via serial port interface 742.

As used herein, the terms "computer program medium" and "computer-readable storage medium" are used to generally refer to media (e.g., non-transitory media) such as the hard disk associated with hard disk drive 714, removable magnetic disk 718, removable optical disk 722, as well as other media such as flash memory cards, digital video disks, random access memories (RAMs), read only memories (ROM), and the like. A computer-readable storage medium is not a signal, such as a carrier signal or a propagating signal. For instance, a computer-readable storage medium may not include a signal. Accordingly, a computer-readable storage medium does not constitute a signal per se. Such computer-readable storage media are distinguished from and nonoverlapping with communication media (do not include communication media). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media. Example embodiments are also directed to such communication media.

As noted above, computer programs and modules and kernels (including application programs 732, other program modules 734, and kernel 756) may be stored on the hard disk, magnetic disk, optical disk, ROM, or RAM. Such computer programs and kernels may also be received via network interface 750 or serial port interface 742. Such computer programs, when executed or loaded by an application, enable computer 700 to implement features of embodiments discussed herein. Accordingly, such computer programs represent controllers of the computer 700.

Computer 700 also includes a graphics processing unit 754, which is configured to execute the kernel 756. In an aspect, the application programs 732 include an application having (e.g., including) a kernel launching instruction. For instance, the time estimation-based kernel configuration logic 108 shown in FIG. 1 and/or the time estimation-based kernel configuration logic 508 shown in FIG. 5 may include the kernel launching instruction. The kernel launching instruction is configured to cause (e.g., trigger) the kernel 756 to be launched on the graphics processing unit 754. For instance, execution of the kernel launching instruction may initiate a launch of the kernel 756. In an aspect, execution of the kernel launching instruction causes the kernel 756 to be transferred from the RAM 710 to GPU memory, which is associated with (e.g., within) the graphics processing unit 754, for execution by the graphics processing unit 754. In an example, execution of the kernel launching instruction causes a direct memory access (DMA) engine to transfer the kernel 756 from the RAM 710 to the GPU memory. The program modules 734 may include the DMA engine.

Example embodiments are also directed to computer program products comprising software (e.g., computer-readable instructions) stored on any computer-useable medium. Such software, when executed in one or more data processing devices, causes data processing device(s) to operate as described herein. Embodiments may employ any computer-useable or computer-readable medium, known now or in the future. Examples of computer-readable mediums include, but are not limited to storage devices such as RAM, hard drives, floppy disks, CD ROMs, DVD ROMs, zip disks, tapes, magnetic storage devices, optical storage devices, MEMS-based storage devices, nanotechnology-based storage devices, and the like.

It will be recognized that the disclosed technologies are not limited to any particular computer or type of hardware. Certain details of suitable computers and hardware are well known and need not be set forth in detail in this disclosure.

### IV. Conclusion

The foregoing detailed description refers to the accompanying drawings that illustrate exemplary embodiments of the present invention. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention.

References in the specification to "one embodiment," "an embodiment," "an example embodiment," or the like, indicate that the embodiment described may include a particular feature, structure, or characteristic, but every embodiment may not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of one skilled in the relevant art(s) to implement such feature, structure, or characteristic in connection with other embodiments whether or not explicitly described.

Descriptors such as "first", "second", "third", etc. are used to reference some elements discussed herein. Such descriptors are used to facilitate the discussion of the example embodiments and do not indicate a required order of the referenced elements, unless an affirmative statement is made herein that such an order is required.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims, and other equivalent features and acts are intended to be within the scope of the claims.

## Claims

1. A system (102A-102M, 106A-106N, 500, 602, 700) comprising:
a processor system (610, 702); and
a memory (620, 622, 624, 704, 708, 710) that stores computer-executable instructions that are executable by the processor system (610, 702) to at least:
define (202) a plurality of tiling strategies, which define respective sizes of first tiles in a first matrix and respective sizes of second tiles in a second matrix that are to be utilized during a plurality of respective implementations of a matrix multiplication operation that is configured to multiply the first tiles and the second tiles, by taking into consideration first dimensions of the first matrix and second dimensions of the second matrix;
calculate (204) a plurality of respective estimated amounts of time, which are to be consumed by a kernel (116, 516, 696) to perform the plurality of respective implementations of the matrix multiplication operation using the plurality of tiling strategies while running on a graphics processing unit (110, 510, 694), by performing a plurality of respective allocations of subsets of elemental operations that define the matrix multiplication operation to streaming multiprocessors (114, 514), which are included in the graphics processing unit (110, 510, 694), in accordance with the plurality of tiling strategies, the plurality of respective allocations taking into consideration a number of the streaming multiprocessors (114, 514), respective capabilities of the streaming multiprocessors (114, 514), and a number of the elemental operations; and
configure (206) the kernel (116, 516, 696) to implement an identified tiling strategy of the plurality of tiling strategies to perform a subsequent implementation of the matrix multiplication operation as a result of an estimated amount of time that is to be consumed by the kernel (116, 516, 696) to perform the subsequent implementation of the matrix multiplication operation using the identified tiling strategy being no greater than an estimated amount of time that is to be consumed by the kernel (116, 516, 696) to perform the subsequent implementation of the matrix multiplication operation using each other tiling strategy of the plurality of tiling strategies.

2. The system according to claim 1, wherein the computer-executable instructions are executable by the processor system to at least:
measure a reference amount of time that the kernel, which is configured to implement an initial tiling strategy, consumes to perform an initial implementation of the matrix multiplication operation using the initial tiling strategy while running on the graphics processing unit, the initial tiling strategy defining an initial size of the first tiles and an initial size of the second tiles utilized during the initial implementation; and
increase an efficiency with which the kernel multiplies the first matrix and the second matrix by reconfiguring the kernel to implement the identified tiling strategy, in lieu of the initial tiling strategy, to perform the subsequent implementation of the matrix multiplication operation as a result of the estimated amount of time that is to be consumed by the kernel to perform the subsequent implementation of the matrix multiplication operation using the identified tiling strategy being no greater than the reference amount of time.

3. The system according to any one of claims 1 to 2, wherein the plurality of tiling strategies further define a plurality of respective orders in which the elemental operations that define the matrix multiplication operation are to be performed during the plurality of respective implementations of the matrix multiplication operation.

4. The system according to any one of claims 1 to 3, wherein the plurality of tiling strategies indicate a plurality of respective numbers of times that a memory access operation is performed during the plurality of respective implementations of the matrix multiplication operation; and
wherein the computer-executable instructions are executable by the processor system to at least:
calculate the plurality of respective estimated amounts of time by taking into consideration the plurality of respective numbers of times that the memory access operation is performed during the plurality of respective implementations of the matrix multiplication operation.

5. The system according to any one of claims 1 to 4, wherein the first dimensions of the first matrix include an M dimension and a K dimension;
wherein the second dimensions of the second matrix include the K dimension and an N dimension; and
wherein the identified tiling strategy is configured to utilize a split-K technique in which the K dimension is split into multiple portions that correspond to respective portions of a designated first tile of the first matrix and that further correspond to respective portions of a designated second tile of the second matrix.

6. The system according to any one of claims 1 to 5, wherein the identified tiling strategy is configured to utilize a stream-K technique that increases a uniformity with which a portion of the elemental operations, which is configured to multiply the designated first tile and the designated second tile, is allocated across the streaming multiprocessors.

7. The system according to any one of claims 1 to 6, wherein:
the first matrix is a first two-dimensional matrix, and wherein the second matrix is a second two-dimensional matrix; or
the first matrix is a first three-dimensional matrix, and wherein the second matrix is a second three-dimensional matrix; or
the first matrix is a first four-dimensional matrix, and wherein the second matrix is a second four-dimensional matrix.

8. A method implemented by a computing system (102A-102M, 106A-106N, 500, 602, 700), the method comprising:
defining (302) a plurality of tiling strategies, which define a plurality of respective orders in which elemental operations that define a matrix multiplication operation are to be performed during a plurality of respective implementations of the matrix multiplication operation, by taking into consideration dimensions of first and second matrices that the matrix multiplication operation is configured to multiply;
calculating (304) a plurality of respective estimated amounts of time, which are to be consumed by a kernel (116, 516, 696) to perform the plurality of respective implementations of the matrix multiplication operation using the plurality of tiling strategies while running on a graphics processing unit (110, 510, 694), by performing a plurality of respective allocations of subsets of the elemental operations to streaming multiprocessors (114, 514), which are included in the graphics processing unit (110, 510, 694), using the plurality of tiling strategies, the plurality of respective allocations taking into consideration a number of the streaming multiprocessors (114, 514), respective capabilities of the streaming multiprocessors (114, 514), a number of the elemental operations, and the dimensions of the first and second matrices; and
configuring (306) the kernel (116, 516, 696) to implement an identified tiling strategy of the plurality of tiling strategies to perform a subsequent implementation of the matrix multiplication operation as a result of an estimated amount of time that is to be consumed by the kernel (116, 516, 696) to perform the subsequent implementation of the matrix multiplication operation using the identified tiling strategy being no greater than an estimated amount of time that is to be consumed by the kernel (116, 516, 696) to perform the subsequent implementation of the matrix multiplication operation using each other tiling strategy of the plurality of tiling strategies.

9. The method according to claim 8, further comprising:
measuring a reference amount of time that the kernel, which is configured to implement an initial tiling strategy, consumes to perform an initial implementation of the matrix multiplication operation using the initial tiling strategy while running on the graphics processing unit, the initial tiling strategy defining an initial order in which the elemental operations that define the matrix multiplication operation are performed during the initial implementation;
wherein configuring the kernel comprises:
increasing an efficiency with which the kernel multiplies the first and second matrices by reconfiguring the kernel to implement the identified tiling strategy, in lieu of the initial tiling strategy, to perform the subsequent implementation of the matrix multiplication operation as a result of the estimated amount of time that is to be consumed by the kernel to perform the subsequent implementation of the matrix multiplication operation using the identified tiling strategy being no greater than the reference amount of time.

10. The method according to any one of claims 8 to 9, wherein the plurality of tiling strategies indicate a plurality of respective numbers of times that a memory access operation is performed during the plurality of respective implementations of the matrix multiplication operation; and
wherein calculating the plurality of respective estimated amounts of time comprises:
calculating the plurality of respective estimated amounts of time by taking into consideration the plurality of respective numbers of times that the memory access operation is performed during the plurality of respective implementations of the matrix multiplication operation.

11. The method according to any one of claims 8 to 10, wherein the dimensions of the first and second matrices include first dimensions of the first matrix and second dimensions of the second matrix, the first dimensions including an M dimension and a K dimension, the second dimensions including the K dimension and an N dimension; and
wherein the identified tiling strategy is configured to utilize a split-K technique in which the K dimension is split into multiple portions, which correspond to respective subsets of the elemental operations that are allocated to respective subsets of the streaming multiprocessors.

12. The method according to any one of claims 8 to 11, wherein the initial tiling strategy is configured to utilize a stream-K technique that increases a uniformity with which an identified subset of the elemental operations that is allocated to a designated subset of the streaming multiprocessors is allocated across the streaming multiprocessors by allocating at least a portion of the identified subset of the elemental operations to another subset of the streaming multiprocessors that is external to the designated subset;
wherein the respective subsets of the elemental operations include the identified subset of the elemental operations; and
wherein the respective subsets of the streaming multiprocessors include the designated subset of the streaming multiprocessors.

13. The method according to any one of claims 8 to 12, wherein each of the first and second matrices is a two-dimensional matrix, or wherein each of the first and second matrices is a three-dimensional matrix, or wherein each of the first and second matrices is a four-dimensional matrix.

14. A computer program product (624, 718, 722) comprising a computer-readable storage medium having instructions recorded thereon for enabling a processor-based system (102A-102M, 106A-106N, 500, 602, 700) to perform operations, the operations comprising:
establishing (402) a plurality of tiling strategies that define a plurality of respective permutations of shape combinations, which define shapes of tiles of first and second matrices that are to be multiplied during a plurality of respective implementations of a matrix multiplication operation that is configured to multiply the first and second matrices, by taking into consideration dimensions of the first and second matrices;
calculating (404) a plurality of respective estimated latencies, which are associated with a kernel (116, 516, 696) performing the plurality of respective implementations of the matrix multiplication operation using the plurality of tiling strategies while running on a graphics processing unit (110, 510, 694), by allocating elemental operations that define the matrix multiplication operation across streaming multiprocessors (114, 514) in the graphics processing unit (110, 510, 694) in conformance with the plurality of tiling strategies utilizing a number of the streaming multiprocessors (114, 514), respective capabilities of the streaming multiprocessors (114, 514), and a number of the elemental operations; and
configuring (406) the kernel (116, 516, 696) to implement an identified tiling strategy of the plurality of tiling strategies to perform a subsequent implementation of the matrix multiplication operation as a result of an estimated latency associated with the kernel (116, 516, 696) performing the subsequent implementation of the matrix multiplication operation using the identified tiling strategy being no greater than an estimated latency associated with the kernel (116, 516, 696) performing the subsequent implementation of the matrix multiplication operation using each other tiling strategy of the plurality of tiling strategies.

15. The computer program product according to claim 14, wherein the operations comprise:
measuring a reference latency associated with the kernel, which is configured to implement an initial tiling strategy, performing an initial implementation of the matrix multiplication operation using the initial tiling strategy while running on the graphics processing unit, the initial tiling strategy defining shapes of initial tiles of the first and second matrices that are multiplied during the initial implementation; and
increasing an efficiency with which the kernel multiplies the first and second matrices by reconfiguring the kernel to implement the identified tiling strategy of the plurality of tiling strategies, in lieu of the initial tiling strategy, to perform the subsequent implementation of the matrix multiplication operation as a result of the estimated latency associated with the kernel performing the subsequent implementation of the matrix multiplication operation using the identified tiling strategy being no greater than the reference latency; and
optionally, wherein the plurality of tiling strategies further define a plurality of respective orders in which the elemental operations that define the matrix multiplication operation are to be performed during the plurality of respective implementations of the matrix multiplication operation.
